# EUROPEAN PATENT APPLICATION

(11) **EP 1 359 475 A1**
(43) Date of publication of application: **05.11.2003**
(21) Application number: 00987645.9
(22) Date of filing: 20.12.2000
(51) Int. Cl.: G04B 17/06, G04C 3/04, G01C 9/06, G01C 9/10, G01C 9/18

(54) **MECHANICAL TIMEPIECE WITH POSTURE DETECTOR AND THE POSTURE DETECTOR**

(71) Applicant: Seiko Instruments Inc., Chiba-shi, Chiba-ken 261-0023 (JP)
(72) Inventor: TOKORO, Takeshi, Seiko Instruments Inc., Chiba-Shi, Chiba 261-0023 (JP); JUJO, Koichiro, Seiko Instrumetns Inc., Chiba-Shi, Chiba 261-0023 (JP)
(74) Representative: BOVARD AG - Patentanwälte
(86) International application number: JP0009020
(87) International publication number: WO02050616

(57) **Abstract**

In a mechanical timepiece according to the invention, a movement 100 includes a balance magnet 140e, a coil 180 and an attitude detecting apparatus 610. The attitude detecting apparatus 610 includes a spherical case, a plurality of patterns arranged at an inner face of the case and a metal ball contained in the case. The attitude detecting apparatus is constituted to detect attitudes of the mechanical timepiece by bringing the metal ball into contact with the patterns. There is constructed a constitution in which operation of a balance with hairspring 140 is controlled based on a result of detecting the attitude of the mechanical timepiece detected by the attitude detecting apparatus 610.

## Description

### [Technical Field]

The present invention relates to a mechanical timepiece having an attitude detecting apparatus constituted to be provided with an attitude detecting apparatus for detecting an attitude of a mechanical timepiece by the attitude detecting apparatus and controlling rotation of a balance with hairspring based on a result of detecting the attitude.

Further, the invention relates to an attitude detecting apparatus used in machine, apparatus, for example, mechanical timepiece and capable of detecting an attitude thereof with high accuracy.

### [Background of the Invention]

### (1) Structure of conventional mechanical timepiece

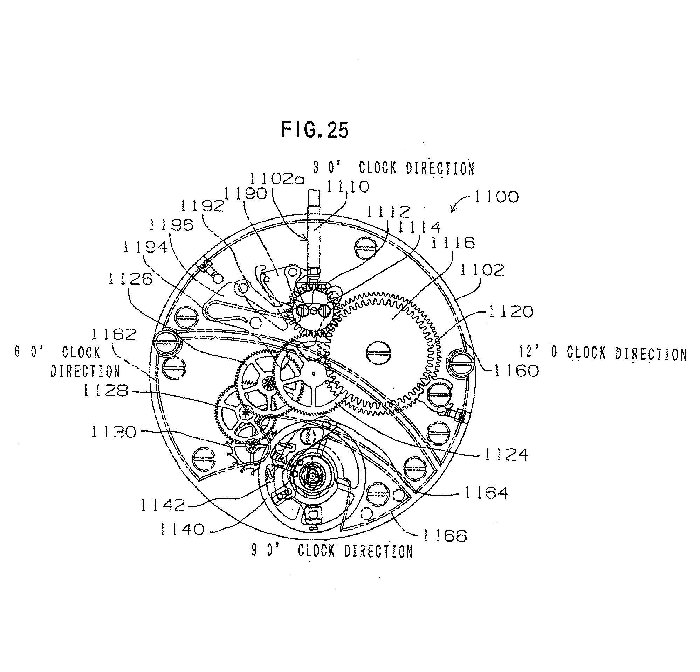

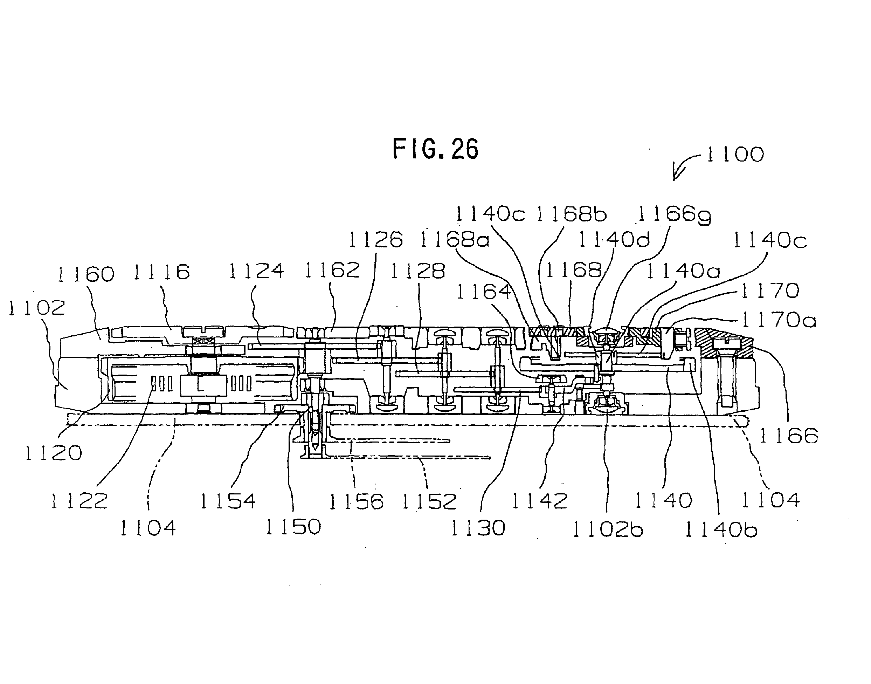

According to a conventional mechanical timepiece, as shown in Fig. 25 and Fig. 26, a movement (machine body) 1100 of a mechanical timepiece is provided with a main plate 1102 constituting a base plate of the movement. A winding stem 1110 is rotatably integrated to a winding stem guide hole 1102a of the main plate 1102. A dial 1104 (shown in Fig. 26 by an imaginary line) is attached to the movement 1100.

In a mechanical timepiece, assuming a state of attaching a dial, there are defined "flat attitude" in which the dial becomes horizontal and "erect attitude (vertical attitude)" in which the dial becomes vertical. Further, the "flat attitude" indicates an attitude in which the mechanical timepiece is arranged with the dial directed to lower side and "back flat attitude" indicates an attitude in which the mechanical timepiece is arranged with the dial directed to upper side.

Further, in a mechanical timepiece, in assuming a state of attaching a dial, a direction of directing from center of the mechanical timepiece toward 12 o'clock graduation of the dial is referred to as "12 o'clock direction", a direction directed from the center of the mechanical timepiece toward 3 o'clock graduation of the dial is referred to as "3 o'clock direction", a direction directed from the center of the mechanical timepiece toward 6 o'clock graduation of the dial is referred to as "six o'clock direction" and a direction directed from the center of the mechanical timepiece toward 9 o'clock direction of the dial is referred to as "9 o'clock direction" (refer to Fig. 25).

Further, in a mechanical timepiece, assuming a state in which a dial is attached and the dial becomes vertical, an attitude in which 12 o'clock graduation of the dial is disposed on an upper side is referred to as "12 o 'clock upper attitude", an attitude in which 3 o' clock graduation of the dial is disposed on the upper side is referred to as "3 o 'clock upper attitude", an attitude in which 6 o' clock graduation of the dial is disposed on the upper side is referred to as "6 o'clock upper attitude" and an attitude in which 9 o'clock graduation of the dial is disposed on the upper side is referred to as "9 o'clock upper attitude".

Further, in a mechanical timepiece, the "rate" is measured with respect to the four erect attitudes of "12 o'clock upper attitude", "3 o'clock upper attitude", "6 o'clock upper attitude" and "9 o'clock upper attitude" and the mechanical timepiece is fabricated by adjusting the rate of the mechanical timepiece such that respective measured values of the "rate" satisfy predetermined standard.

In the following explanation, "rate when a mechanical timepiece is brought into 12 o' clock upper attitude" is referred to as "12 upper rate", "rate when the mechanical timepiece is brought into 3 o'clock upper attitude" is referred to as "3 upper rate", "rate when the mechanical timepiece is brought into 6 o'clock upper attitude" is referred to as "6 upper rate" and "rate when the mechanical timepiece is brought into 9 o'clock upper attitude" is referred to as "9 upper rate".

Generally, in both sides of the main plate, a side thereof having the dial is referred to as "back side" of the movement and a side thereof opposed to the side having the dial is referred to as "front side" of the movement. A train wheel integrated to the "front side" of the movement is referred to as "front train wheel" and a train wheel integrated to the "back side" of the movement is referred to as "back train wheel".

A position in the axis line direction of the winding stem 1110 is determined by a switch apparatus including a setting lever 1190, a yoke 1192, a yoke spring 1194 and a setting lever jumper 1196. A winding pinion 1112 is provided rotatably at a guide shaft portion of the winding stem 1110. When the winding stem 1110 is rotated in the state in which the winding stem 1110 is disposed at a first winding stem position (0-stage) on a side most proximate to the inner side of the movement along the rotational axis line, the winding pinion 1112 is rotated via rotation of a clutch wheel. A crown wheel 1114 is rotated by rotation of the winding pinion 1112. A ratchet wheel 1116 is rotated by rotation of the crown wheel 1114. By rotating the ratchet wheel 1116, a mainspring 1122 contained in a barrel complete 1120 is wound up. A center wheel & pinion 1124 is rotated by rotation of the barrel complete 1120. An escape wheel & pinion 1130 is rotated via rotation of a fourth wheel & pinion 1128, a third wheel & pinion 1126 and the center wheel & pinion 1124. The barrel complete 1120, the center wheel & pinion 1124, the third wheel & pinion 1126 and the fourth wheel & pinion 1128 constitute a front train wheel.

An escapement & speed control apparatus for controlling rotation of the front train wheel includes a balance with hairspring 1140, the escape wheel & pinion 1130 and a pallet fork 1142. The balance with hairspring 1140 includes a balance stem 1140a, a balance wheel 1140b and a hairspring 1140c. Based on rotation of the center wheel & pinion 1124, a cannon pinion 1150 is simultaneously rotated. A minute hand 1152 attached to the cannon pinion 1150 displays "minute". The cannon pinion 1150 is provided with a slip mechanism relative to the center pinion & wheel 1124. Based on rotation of the cannon pinion 1150, via rotation of a minute wheel, an hour wheel 1154 is rotated. An hour hand 1156 attached to the hour wheel 1154 displays "hour".

The barrel complete 1120 is supported rotatably by the main plate 1102 and a barrel bridge 1160. The center wheel & pinion 1124, the third wheel & pinion 1126, the fourth wheel & pinion 1128 and the escape wheel & pinion 1130 are supported rotatably by the main plate 1102 and a train wheel bridge 1162. The pallet fork 1142 is supported rotatably by the main plate 1102 and a pallet bridge 1164. The balance with hairspring 1140 is supported rotatably by the main plate 1102 and a balance bridge 1166.

The hairspring 1140c is a leaf spring in a helical (spiral) shape having a plural turn number. An inner end portion of the hairspring 1140c is fixed to a hairspring holder 1140d fixed to the balance stem 1140a and an outer end portion of the hairspring 1140c is fixed via a hairspring stud 1170a attached to a stud support 1170 fixed to the balance bridge 1166 by fastening screws.

A regulator 1168 is attached rotatably to the balance bridge 1166. A hairspring bridge 1340 and a hairspring rod 1342 are attached to the regulator 1168. A portion of the hairspring 1140c proximate to the outer end portion is disposed between the hairspring bridge 1340 and the hairspring rod 1342.

### (2) Mainspring torque and swing angle of balance with hairspring of conventional mechanical timepiece

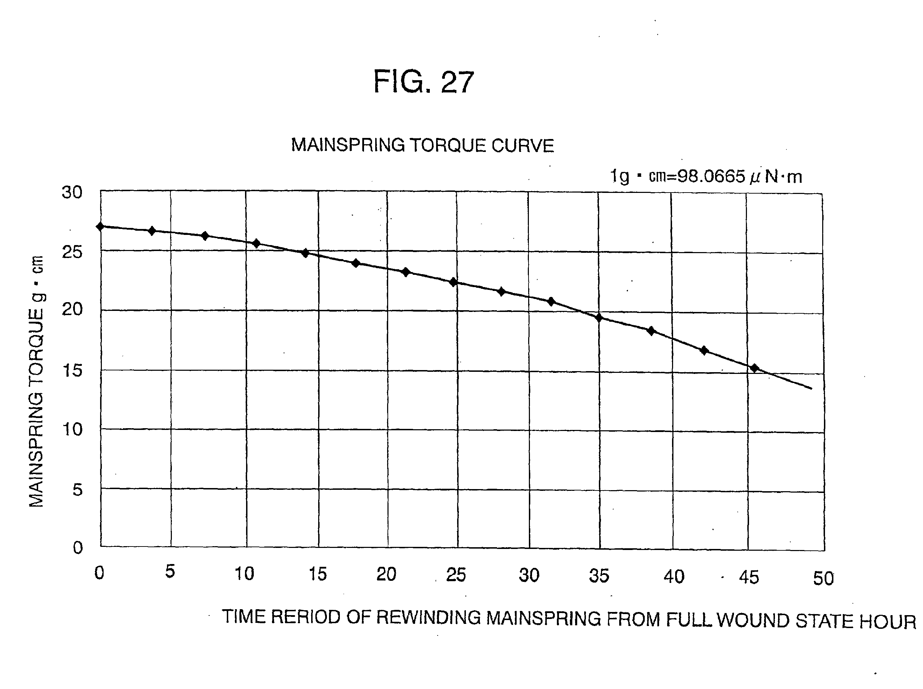

Generally, according to a conventional representative mechanical timepiece, as shown by Fig. 27, with elapse of a duration time period of rewinding the mainspring from a state in which the mainspring has completely been wound up (fully wound state), mainspring torque is reduced. For example, in the case of Fig. 27, the mainspring torque is about 27 g•cm in the fully wound state, becomes about 23 g•cm after elapse of 20 hours from the fully wound state and becomes about 18 g•cm after elapse of 40 hours from the fully wound state.

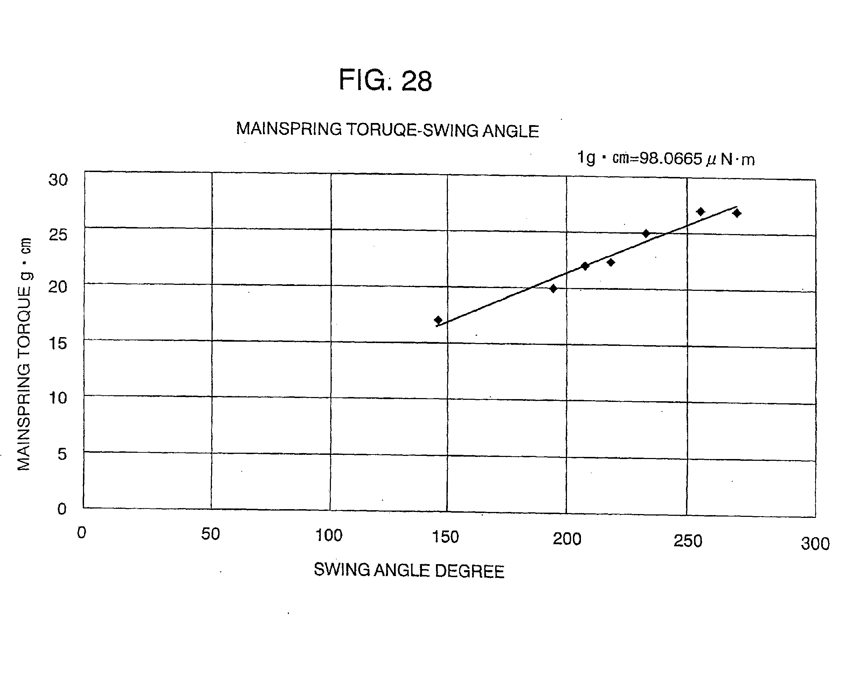

Generally, according to a conventional representative mechanical timepiece, as shown by Fig. 28, when the mainspring torque is reduced, the swing angle of the balance with hairspring is also reduced. For example, in the case of Fig. 28, when the mainspring torque is 25-28 g•cm, the swing angle of the balance with hairspring is about 240-270 degree and when the mainspring torque is 20-25 g•cm, the swing angle of the balance with hairspring is about 180-240 degree.

### (3) Instantaneous rate of conventional mechanical timepiece

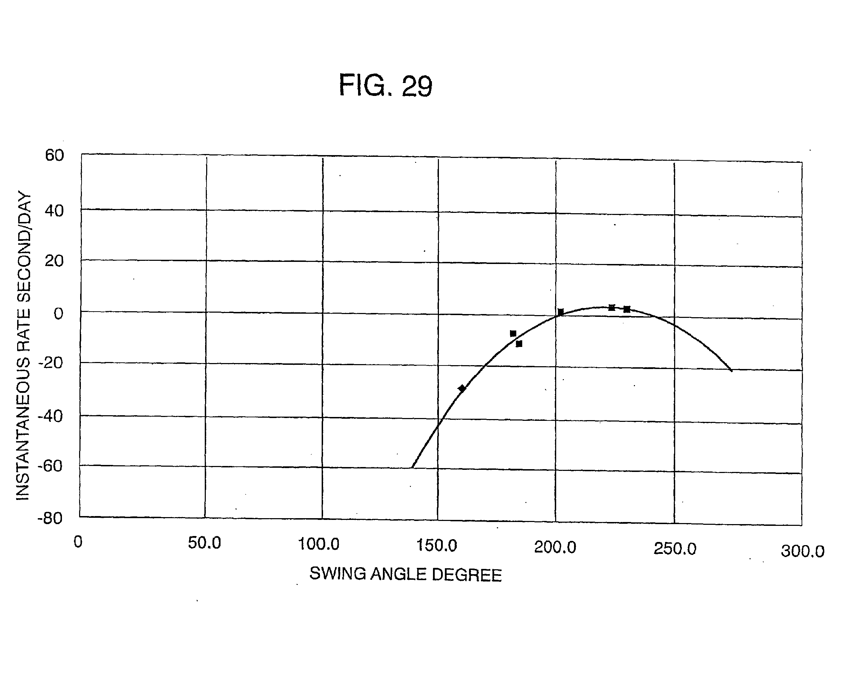

In reference to Fig. 29, there is shown a transitional change of instantaneous rate with regard to swing angle of a balance with hairspring in a state in which the mechanical timepiece is disposed in flat attitude according to a conventional representative mechanical timepiece (numerical value indicating accuracy of timepiece). In this case, the "instantaneous rate" is defined as "a value indicating gain or loss of a mechanical timepiece after elapse of one day after the mechanical timepiece is assumed to be left for one day while maintaining state or environment of swing angle of a balance with hairspring or the like when the rate is measured". In the case of Fig. 29, when a swing angle of a balance with hairspring is equal to or larger than 240 degree or is equal to or smaller than 200 degree, the instantaneous rate is retarded.

For example, according to a conventional representative mechanical timepiece, as shown by Fig. 29, when the swing angle of the balance with hairspring falls in a range of about 200 through 240 degree, the instantaneous rate is about 0 through 5 seconds / day (gain of 0 through 5 seconds per day), however, when the swing angle of the balance with hairspring is about 170 degree, the instantaneous rate becomes about -20 seconds / day (loss of about 20 seconds per day).

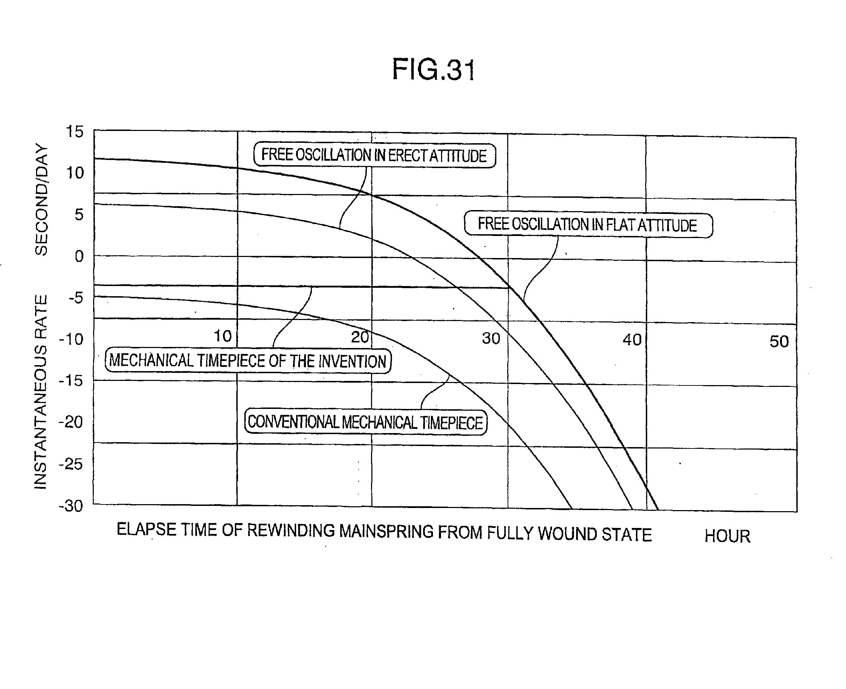

In reference to Fig. 31, there is shown a transitional change of elapse time and instantaneous rate when a mainspring is rewound from a fully wound state in a conventional representative mechanical timepiece. In this case, in the conventional mechanical timepiece, "rate" indicating gain of the timepiece or loss of the timepiece per day, is provided by integrating instantaneous rate with regard to elapse time of rewinding the balance with hairspring from a fully wound state, which is indicated in Fig. 31 by a bold line, over 24 hours.

Generally, according to the conventional mechanical timepiece, with elapse of duration time period of rewinding the mainspring from the fully wound state, the mainspring torque is reduced, the swing angle of the balance with hairspring is also reduced and accordingly, the instantaneous rate is retarded. Therefore, according to the conventional mechanical timepiece, by estimating loss of the timepiece after elapse of the duration time period of 24 hours, instantaneous rate when the mainspring is brought into the fully wound state, is previously gained and previously adjusted such that the "rate" indicating gain of the timepiece or loss of the timepiece per day becomes positive.

For example, according to the conventional representative mechanical timepiece, as shown by the bold line in Fig. 31, although in the fully wound state, the instantaneous rate is about 5 seconds / day (gain of about 5 seconds per day), after elapse of 20 hours from the fully wound state, the instantaneous rate becomes about -1 second / day (loss of about 1 second per day), after elapse of 24 hours from the fully wound state, the instantaneous rate becomes about -5 seconds per day (loss of about 5 seconds per day) and after elapse of 30 hours from the fully wound state, the instantaneous rate becomes about -15 seconds / day (loss of about 15 seconds per day).

### (4) Attitude and instantaneous rate of conventional mechanical timepiece

Further, according to a conventional representative mechanical timepiece, instantaneous rates in "flat attitude" and "back flat attitude" are on the gain side in comparison with instantaneous rate in "erect attitude".

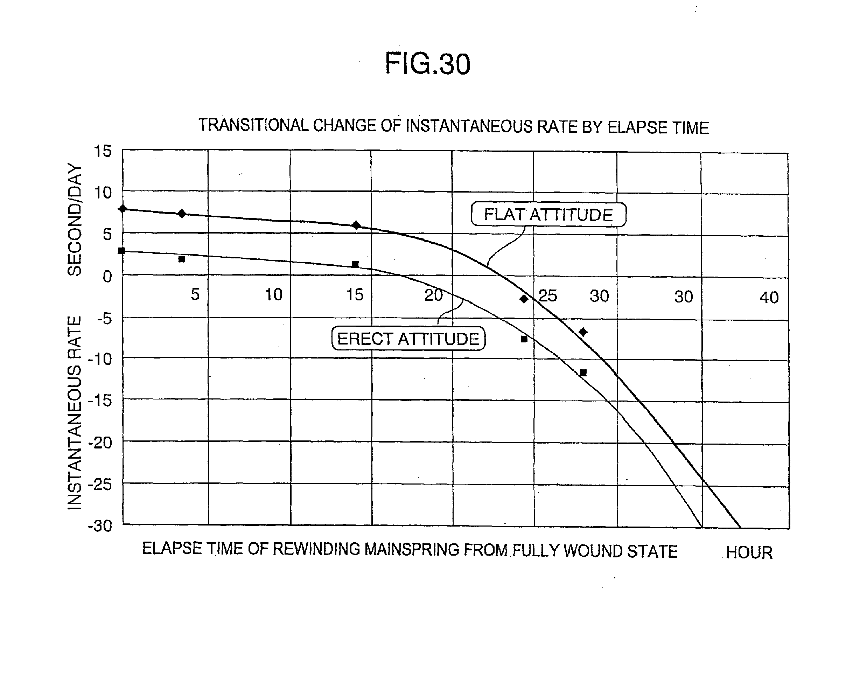

For example, according to a conventional representative mechanical timepiece, in the case of "flat attitude" and "back flat attitude", as shown by a bold line in Fig. 30, although in a fully wound state, instantaneous rate is about 8 seconds / day (gain of about 8 seconds per day), when 20 hours have elapsed from the fully wound state, the instantaneous rate becomes about 3 seconds / day (gain of about 3 seconds per day), when 24 hours have elapsed from the fully wound state, the instantaneous rate becomes about -2 seconds / day (loss of about 2 seconds per day) and when 30 hours have elapsed from the fully wound state, the instantaneous rate becomes about -12 seconds / day (loss of about 12 seconds per day).

In contrast thereto, according to the conventional representative mechanical timepiece, in the case of "erect attitude", as shown by a slender line in Fig. 30, although in the fully wound state, instantaneous rate is about 3 seconds / day (gain of about 3 seconds per day), when 20 hours have elapsed from the fully wound state, the instantaneous rate become about -2 seconds / day (loss of about 2 seconds per day), when 24 hours have elapsed from the fully wound state, the instantaneous rate becomes about -7 seconds / day (loss of about 7 seconds per day) and when 30 hours have elapsed from the fully wound state, the instantaneous rate becomes about -17 seconds / day (loss of about 17 seconds per day).

### (5) Representative literature disclosing conventional technology

<1> There is disclosed a swing angle adjusting apparatus of a balance with hairspring having a swing angle adjusting plate for exerting brake force to the balance with hairspring by generating overcurrent at every time at which a magnet of the balance with hairspring becomes pivotably proximate thereto in Japanese Utility Model Laid-Open No. 41675/1979.

<2> There is disclosed a body position detecting apparatus constituted to provide six patterns at an inner face of a cabinet having a shape of a hexahedron and including a conductive fluid for connecting the patterns in Japanese Patent Laid-Open No. 159726/1983.

<3> There is disclosed an inclination angle detector having a container including a conductive fluid and having at least three of liquid level detecting lines for detecting the liquid level of the conductive fluid in Japanese Patent Laid-Open No. 79117/1986.

<4> There is disclosed an angle sensor having a spherical hollow case, a plurality of contacts provided at inside of the case and a conductive fluid enclosed in the case in Japanese Patent Laid-Open No. 120214/1988.

<5> There is disclosed an attitude detecting apparatus constituted to have a hollow outer spherical member and an inner spherical member fixed at a hollow portion of the outer spherical member by providing a predetermined layer space and arrange a fluid conductor between a first conductive region including a pattern provided at an entire region of an inner side of the outer spherical member and a second conductive region including a plurality of patterns provided in a spotted shape at an outer side of the inner spherical member. According to the attitude detecting apparatus, there is constructed a constitution in which the fluid conductor can move in the layer space between the first conductive region and the second conductive region and an attitude of the apparatus can be detected by conducting one of the patterns in the second conductive region with the pattern of the first conductive region by the fluid conductive member in Japanese Patent Laid-Open No. 307805/1994.

<6> There is disclosed an inclination sensor having a bent recess portion contiguous to a reference electrode maintained at a predetermined potential inanonconductive state and having a plurality of detecting electrodes maintained at a potential different from the potential of the reference electrode and a movable conductor movable in the bent recess portion and capable of shortcircuiting the reference electrode and the detecting electrodes in Japanese Patent Laid-Open No. 23266/1999.

<7> There is disclosed a switch apparatus having a switch box, a pair of electrodes installed to be opposed to each other at a predetermined interval in the switch box and a spherical conductor contained movably in the switch box in Japanese Patent Laid-Open No. 73831/1999.

### (6) Object of the invention

It is an object of the invention to provide a mechanical timepiece capable of detecting an attitude of the mechanical timepiece and controlling a swing angle of a balance with hairspring to fall in a constant range by a result of the detection.

Further, it is an object of the invention to provide a mechanical timepiece having excellent accuracy in which a change in a rate is small even when a time period has elapsed from a fully wound state.

Further, it is an object of the invention to provide an attitude detecting apparatus used in a machine or an apparatus and capable of detecting the attitude with high accuracy.

Further, it is an object of the invention to provide a small-sized and highly accurate attitude detecting apparatus capable of being used in a small-sized precision apparatus such as a mechanical timepiece.

### [Disclosure of the Invention]

According to an aspect of the invention, there is provided a mechanical timepiece characterized in a mechanical timepiece comprising a mainspring constituting a power source of the mechanical timepiece, a front train wheel rotated by a rotational force in rewinding the mainspring and an escapement and speed control apparatus for controlling rotation of the front train wheel, the escapement and speed control apparatus being constituted to include a balance with hairspring alternately repeating right rotation and left rotation, an escape wheel & pinion rotated based on the rotation of the front train wheel and a pallet fork for controlling rotation of the escape wheel and pinion based on operation of the balance with hairspring, further comprising a switch mechanism constituted to output a signal of ON when a rotational angle of the balance with hairspring becomes equal to or larger than a predetermined threshold and outputting a signal of OFF when the rotational angle of the balance with hairspring does not exceed the threshold value, a balance with hairspring rotational angle control mechanism constituted to exert a force for restraining rotation of the balance with hairspring to the balance with hairspring when the switch mechanism outputs the signal of ON, and an attitude detecting apparatus for detecting an attitude of the mechanical timepiece, wherein operation of the balance with hairspring rotational angle control mechanism is constituted to control based on a result of detecting the attitude of the mechanical timepiece detected by the attitude detecting apparatus, the attitude detecting apparatus includes a spherical case and a plurality of patterns arranged at an inner face of the case and a metal ball contained in the case, and the attitude detecting apparatus is constituted to detect the attitude of the mechanical timepiece by bringing the metal ball into contact with the patterns.

It is preferable to constitute the mechanical timepiece according to the invention such that the plurality of patterns of the attitude detecting apparatus include six circular patterns, wherein the six circular patterns are respectively arranged in a positive direction and a negative direction of an X-axis line, in a positive direction and a negative direction of a Y-axis line and in a positive direction and a negative direction of a Z-axis line to thereby constitute point symmetry on an inner side of the case.

Further, it is preferable to constitute the mechanical timepiece of the invention such that the plurality of patterns of the attitude detecting apparatus include six circular patterns and six ring-like patterns, wherein the respective circular patterns are arranged to be concentric with the respective ring-like patterns, the six circular patterns are respectively arranged in a positive direction and a negative direction of an X-axis line, in a positive direction and a negative direction of a Y-axis line and in a positive direction and a negative direction of a Z-axis line to constitute point symmetry on an inner side of the case, and the six ring-like patterns are respectively arranged in the positive direction and the negative direction of the X-axis line, in the positive direction and the negative direction of the Y-axis line and in the positive direction and the negative direction of the Z-axis line to constitute point symmetry on the inner side of the case.

Further, the mechanical timepiece of the invention can also be constituted such that the attitude detecting apparatus includes an insulating fluid contained in the case.

Further, the mechanical timepiece of the invention can also be constituted such that the attitude detecting apparatus includes the insulating fluid contained in the case wherein a plastic ball is contained in the case, the plastic ball includes a conductive layer at outside thereof, a specific gravity of the insulating fluid is larger than a specific gravity of the plastic ball, and when the plastic ball is contained in the case, the plastic ball is floated in the insulating fluid and the conductive layer of the plastic ball is brought into contact with an upper one of the patterns.

Further, it is preferable that the mechanical timepiece of the invention is constituted such that the switch mechanism is constituted to output the signal of ON when a hairspring provided at the balance with hairspring is brought into contact with a contact member constituting a switch lever.

Further, it is preferable that the mechanical timepiece of the invention is constituted such that the balance with hairspring rotational angle control mechanism includes a balance magnet provided at the balance with hairspring and coils arranged to be capable of exerting amagnetic force to the balance magnet, wherein the coils are constituted to exert the magnetic force to the balance magnet to thereby restrain the rotation of the balance with hairspring when the switch mechanism outputs the signal of ON and not to exert the magnetic force to the balance magnet, when the switching mechanism outputs the signal of OFF.

Further, it is preferable that the mechanical timepiece of the invention is constituted such that the attitude detecting apparatus includes a plurality of resistors having different resistance values provided to correspond to conductive states of the patterns of the attitude detecting apparatus and one of the resistors is connected to the coils based on a result of detecting the attitude of the mechanical timepiece detected by the attitude detecting apparatus.

By constituting the mechanical timepiece in this way, the rotational angle of the balance with hairspring of the mechanical timepiece can effectively be controlled, thereby, accuracy of the mechanical timepiece can be promoted.

Further, according to another aspect of the invention, there is provided an attitude detecting apparatus comprising a spherical case, a plurality of patterns arranged at an inner face of the case, and a metal ball contained in the case, wherein an attitude is detected by bringing the metal ball and the patterns into contact with each other.

It is preferable in the attitude detecting apparatus of the invention that the plurality of patterns include six circular patterns, wherein the six circular patterns are respectively arranged in a positive direction and a negative direction of an X-axis line, in a positive direction and a negative direction of a Y-axis line and in a positive direction and a negative direction of a Z-axis line to constitute point symmetry on an inner side of the case.

The attitude detecting apparatus of the invention can also be constituted such that the plurality of patterns include six circular patterns and six ring-like patterns, wherein the respective circular patterns are respectively arranged to be concentric with the ring-like patterns, the six circular patterns are respectively arranged in a positive direction and a negative direction of an X-axis line, in a positive direction and a negative direction of a Y-axis line and in a positive direction and a negative direction of a Z-axis line to constitute point symmetry on an inner side of the case, and the six ring-like patterns are respectively arranged in the positive direction and the negative direction of the X-axis line, in the positive direction and the negative direction of the Y-axis line and in the positive direction and the negative direction of the Z-axis line to constitute point symmetry on the inner side of the case.

Further, the attitude detecting apparatus of the invention can also be constituted to include an insulating fluid contained in the case.

Further, the attitude detecting apparatus of the invention can also be constituted such that the attitude detecting apparatus includes an insulating fluid contained in a case, wherein a plastic ball is contained in the case, the plastic ball includes a conductive layer at outside thereof, a specific gravity of the insulating fluid is larger than a specific gravity of the plastic ball, and when the plastic ball is contained in the case, the plastic ball is floated in the insulating fluid and the conductive layer of the plastic ball is brought into contact with an upper one of the patterns.

By constituting the attitude detecting apparatus in this way, there can be realized the attitude detecting apparatus which is small-sized and highly accurate.

### [Brief Description of the Drawings]

Fig. 1 is a plane view showing an outline shape of a front side according to an embodiment of a movement of a mechanical timepiece having an attitude detecting apparatus of the invention (in Fig. 1, portions of parts are omitted and bridge members are indicated by imaginary lines).
Fig. 2 is an outline partially sectional view of the embodiment of the movement of the mechanical timepiece having the attitude detecting apparatus according to the invention (in Fig. 2, portions of parts are omitted).
Fig. 3 is an enlarged partial plane view showing an outline shape of a portion of a balance with hairspring in a state in which a switch mechanism is made OFF in the mechanical timepiece having the attitude detecting apparatus according to the invention.
Fig. 4 is an enlarged partial sectional view showing the outline shape of the portion of the balance with hairspring in the state in which the switch mechanism is made OFF in the mechanical timepiece having the attitude detecting apparatus according to the invention.
Fig. 5 is a perspective view showing an outline shape of a balance magnet used in the mechanical timepiece having the attitude detecting apparatus according to the invention.
Fig. 6 is a plane view showing outline shapes of patterns provided at an inner face of a case lower half portion according to a first embodiment of an attitude detecting apparatus of the invention.
Fig. 7 is a perspective view showing an outline shape when the attitude detecting apparatus is disposed in flat attitude according to the first embodiment of the attitude detecting apparatus of the invention (in Fig. 7, an electrode is illustrated to be seen through).
Fig. 8 is a vertical sectional view showing a state in which the attitude detecting apparatus is inclined (skewed attitude) according to the first embodiment of the attitude detecting apparatus of the invention (in Fig. 8, the electrode is illustrated to be seen through).
Fig. 9 is a perspective view showing an outline shape when the attitude detecting apparatus is disposed in a vertical attitude according to the first embodiment of the attitude detecting apparatus of the invention (in Fig. 9, the electrode is illustrated to be seen through).
Fig. 10 is a perspective view showing shapes of lead lines according to the first embodiment of the attitude detecting apparatus of the invention.
Fig. 11 is a circuit wiring diagram in a state in which two patterns are conducted according to the first embodiment of the attitude detecting apparatus of the invention.
Fig. 12 is a table showing a relationship among attitudes of arranging a mechanical timepiece, conductive states of patterns and values of resistors provided at a circuit block in the mechanical timepiece having the first embodiment of the attitude detecting apparatus of the invention.
Fig. 13 is a block diagram showing operation of the attitude detecting apparatus according to the invention in the mechanical timepiece having the first embodiment of the attitude detecting apparatus according to the invention.
Fig. 14 is an enlarged partial plane view showing an outline shape of a portion of a balance with hairspring in a state in which the switch mechanism is made ON according to the mechanical timepiece having the attitude detecting apparatus of the invention.
Fig. 15 is an enlarged partial sectional view showing the outline shape of the portion of the balance with hairspring in the state in which the switch mechanism is made ON according to the mechanical timepiece having the attitude detecting apparatus of the invention.
Fig. 16 is a perspective view showing an outline shape when an attitude detecting apparatus is disposed in a flat attitude according to a modified example of the first embodiment of the attitude detecting apparatus of the invention (in Fig. 16, an electrode is illustrated to be seen through).
Fig. 17 is a perspective view showing an outline shape of a second embodiment of the attitude detecting apparatus according to the invention (in Fig. 17, the electrode is illustrated to be seen through).
Fig. 18 is a table showing a relationship among attitudes of arranging a mechanical timepiece, conductive states of patterns and values of resistors provided at a circuit block according to the mechanical timepiece having the second embodiment of the attitude detecting apparatus of the invention.
Fig. 19 is a perspective view showing an outline shape of a third embodiment of an attitude detecting apparatus according to the invention (in Fig. 19, an electrode is illustrated to be seen through).
Fig. 20 is a perspective view showing an outline shape of a fourth embodiment of an attitude detecting apparatus according to the invention (in Fig. 20, an electrode is illustrated to be seen through).
Fig. 21 is a perspective view showing an outline shape of a fifth embodiment of an attitude detecting apparatus according to the invention (in Fig. 21, an electrode is illustrated to be seen through).
Fig. 22 is a vertical sectional view showing an outline shape of the fifth embodiment of the attitude detecting apparatus according to the invention.
Fig. 23 is a sectional view showing a shape of an enclosed plastic ball according to the fifth embodiment of the attitude detecting apparatus of the invention.
Fig. 24 is a table showing a relationship among attitudes of arranging a mechanical timepiece, conductive states of patterns and values of resistors provided at a circuit block in the mechanical timepiece having the fifth embodiment of the attitude detecting apparatus of the invention.
Fig. 25 is a plane view showing an outline shape of a front side of a movement of a conventional mechanical timepiece (in Fig. 25, portions of parts are omitted and bridge members are indicated by imaginary lines).
Fig. 26 is an outline partial sectional view of the movement of the conventional mechanical timepiece (in Fig. 26, portions of parts are omitted).
Fig. 27 is a graph showing an outline of a relationship between an elapse time period of rewinding a mainspring from a full wound state and mainspring torque in a mechanical timepiece.
Fig. 28 is a graph showing an outline of a relationship between a swing angle of a balance with hairspring and mainspring torque in a mechanical timepiece.
Fig. 29 is a graph showing an outline of a relationship between a swing angle of a balance with hairspring and an instantaneous rate when placed in a flat attitude in a mechanical timepiece.
Fig. 30 is a graph showing an outline of a relationship between an elapse time of rewinding a mainspring from a fully wound state and instantaneous rates (flat attitude and erect attitude) in a mechanical timepiece.
Fig. 31 is a graph showing an outline of a relationship between an elapse time of rewinding a mainspring from a fully wound state and instantaneous rates in a mechanical timepiece according to the invention and a conventional mechanical timepiece.

### [Best Mode for Carrying Out the Invention]

An explanation will be given of embodiments of a mechanical timepiece according to the invention in reference to the drawings as follows.

### (1) Train wheel, escapement & speed control apparatus and switch apparatus

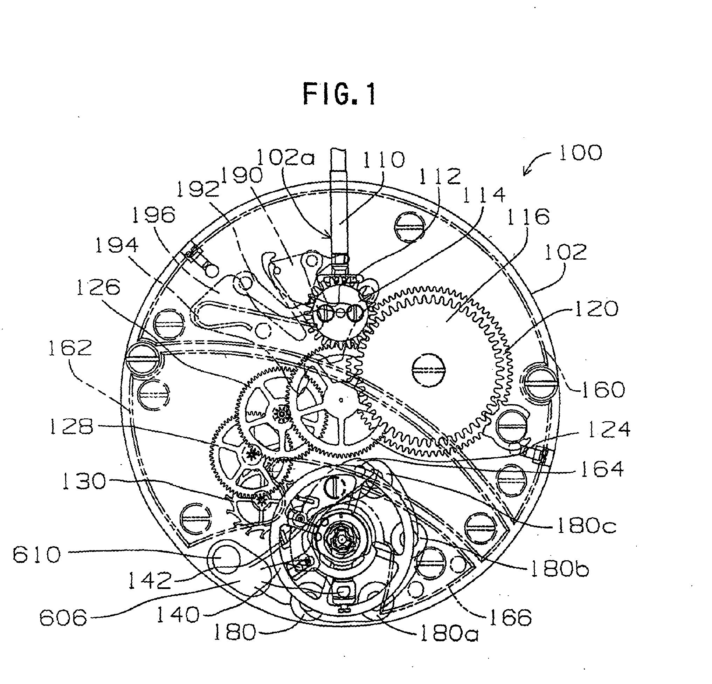

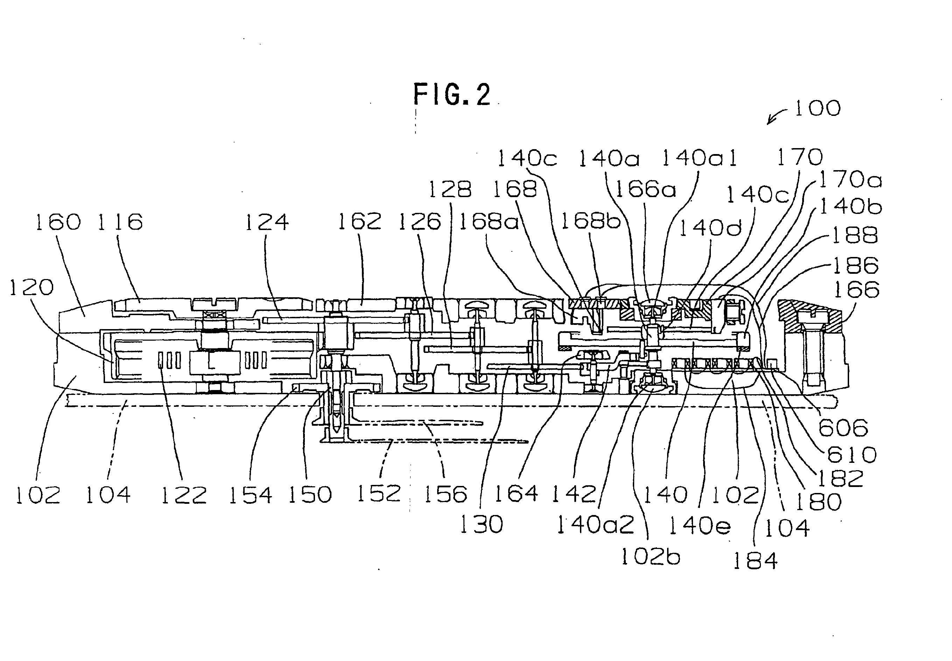

In reference to Fig. 1 and Fig. 2, according to an embodiment of a mechanical timepiece of the invention, a movement (machine body) 100 of the mechanical timepiece is provided with a main plate 102 constituting a base plate of the movement. A winding stem 110 is rotatably integrated to a winding stem guide hole 102a of the main plate 102. A dial 104 (shown by Fig. 2 by imaginary line) is attached to the movement 100.

The winding stem 110 is provided with a square portion and a guide shaft portion. A clutch wheel (not illustrated) is integrated to the square portion of the winding stem 110. That is, the clutch wheel is provided with a rotational axis line the same as a rotational axis line of the winding stem 110. That is, the clutch wheel is provided with a square hole and is provided to rotate based on rotation of the winding stem 110 by fitting the square hole to the square portion of the winding stem 110. The clutch wheel is provided with tooth A and tooth B. The tooth A is provided at an end portion of the clutch wheel proximate to the center of the movement. The tooth B is provided at an end portion of the clutch wheel proximate to an outer side of the movement.

The movement 100 is provided with a switch apparatus for determining a position of the winding stem 110 in the axial line direction. The switch apparatus includes a setting lever 190, a yoke 192, a yoke spring 194 and a setting lever jumper 196. Based on rotation of the clutch wheel, the position in the rotational axis line of the winding stem 110 is determined. Based on rotation of the yoke 192, a position in the rotational axis line direction of the clutch wheel is determined. Based on rotation of the setting lever, the yoke is positioned to two positions in the rotational direction.

A winding pinion 112 is provided rotatably at the guide shaft portion of the winding stem 110. When the winding stem 110 is rotated in a state in which the winding stem 110 is disposed at a first winding stem position (0-stage) most proximate to the inner side of the movement 100 along the rotational axis line, the winding pinion 112 is constituted to rotate via rotation of the clutch wheel. A crown wheel 114 is constituted to rotate by rotation of the winding pinion 112. A ratchet wheel 116 is constituted to rotate by rotation of the crown wheel 114.

The movement 100 is provided with a mainspring 122 contained in a barrel complete 120 as its power source. The mainspring 122 is made of an elastic material having spring performance such as iron. By rotating the ratchet wheel 116, the mainspring 122 is constituted to be capable of being wound up.

A center wheel & pinion 124 is constituted to rotate by rotation of the barrel complete 120. A third wheel & pinion 126 is constituted to rotate based on rotation of the center wheel & pinion 124. A fourth wheel & pinion 128 is constituted to rotate based on rotation of the third wheel & pinion 126. An escape wheel & pinion 130 is constituted to rotate based on rotation of the fourth wheel & pinion 128. The barrel complete 120, the center wheel & pinion 124, the third wheel & pinion 126 and the fourth wheel & pinion 128 constitute a front train wheel.

The movement 100 is provided with an escapement & speed control apparatus for controlling rotation of the front train wheel. The escapement & speed control apparatus includes a balance with hairspring 140 repeating right rotation and left rotation at a constant period, the escape wheel & pinion 130 rotating based on rotation of the front train wheel and a pallet fork 142 for controlling rotation of the escape wheel & pinion 130 based on operation of the balance with hairspring 140.

In reference to Fig. 1 through Fig. 4, the balance with hairspring 140 includes a balance stem 140a, a balance wheel 140b and a hairspring 140c. The hairspring 140c is made of an elastic material having spring performance such as "elinbar". That is, the hairspring 140c is made of an electrically conducting material of metal.

Based on rotation of the center wheel & pinion 124, a cannon pinion 150 is simultaneously rotated. A minute hand 152 attached to the cannon pinion 150 is constituted to display "minute". The cannon pinion 150 is provided with a slip mechanism having a predetermined slip torque relative to the center wheel & pinion 124.

Based on rotation of the cannon pinion 150, a minute wheel (not illustrated) is rotated. Based on rotation of the minute wheel, an hour wheel 154 is rotated. An hour hand 156 attached to the hour wheel 154 is constituted to display "hour".

The barrel complete 120 is supported rotatably by the main plate 102 and a barrel bridge 160. The center wheel & pinion 124, the third wheel & pinion 126, the fourth wheel & pinion 128 and the escape wheel & pinion 130 are supported rotatably by the main plate 102 and a train wheel bridge 162. The pallet fork 142 is supported rotatably by the main plate 102 and a pallet bridge 164.

The balance with hairspring 140 is supported rotatably by the main plate 102 and a balance bridge 166. That is, an upper mortise 140a1 of the balance stem 140a is supported rotatably by a balance upper bearing 166a fixed to the balance bridge 166. The balance upper bearing 166a includes a balance upper hole jewel and a balance upper cap jewel. The balance upper hole jewel and the balance upper cap jewel are made of an insulating material such as ruby.

A lower mortise 140a2 of the balance stem 140a is supported rotatably by a balance lower bearing 102b fixed to the main plate 102. The balance lower bearing 102b includes a balance lower hole jewel and a balance lower cap jewel. The balance lower hole jewel and the balance lower cap jewel are made of an insulating material such as ruby.

The hairspring 140c is a leaf spring in a helical (spiral) shape having a plural turn number. An inner end portion of the hairspring 140c is fixed to a hairspring holder 140d fixed to the balance stem 140a and an outer end portion of the hairspring 140c is fixed by screws via a hairspring holder 170a attached to a hairspring holder cap 170 rotatably fixed to the balance bridge 166. The balance bridge 166 is made of an electrically conductive material of metal such as brass. The hairspring holder cap 170 is made of an electrically conductive material of metal such as iron.

### (2) Switch mechanism

Next, an explanation will be given of a switch mechanism of the mechanical timepiece according to the invention.

In reference to Fig. 1 through Fig. 4, a switch lever 168 is rotatably attached to the balance bridge 166. A first terminal member 168a and a second terminal member 168b are attached to the switch lever 168. The switch lever 168 is attached to the balance bridge 166 and is rotatably attached thereto centering on the rotational center of the balance with hairspring 140. The switch lever 168 is formed by an insulating material of plastic such as polycarbonate. The first terminal member 168a and the second terminal member 168b are fabricated by a conductive material of a metal such as brass. A portion of the hairspring 140c proximate to an outer end portion thereof is disposed between the first terminal member 168a and the second terminal member 168b.

Coils 180, 180a, 180b and 180c are attached at a face on the front side of the main plate 102 to be opposed to a side face of the balance wheel 140b on the side of the main plate. As shown by Fig. 1 through Fig. 4, a number of the coils is, for example, four, however, the number may be one, may be two, may be three or may be four or more.

A balance magnet 140e is attached to the face of the balance wheel 140b on the side of the main plate to be opposed to the face of the main plate 102 on the front side.

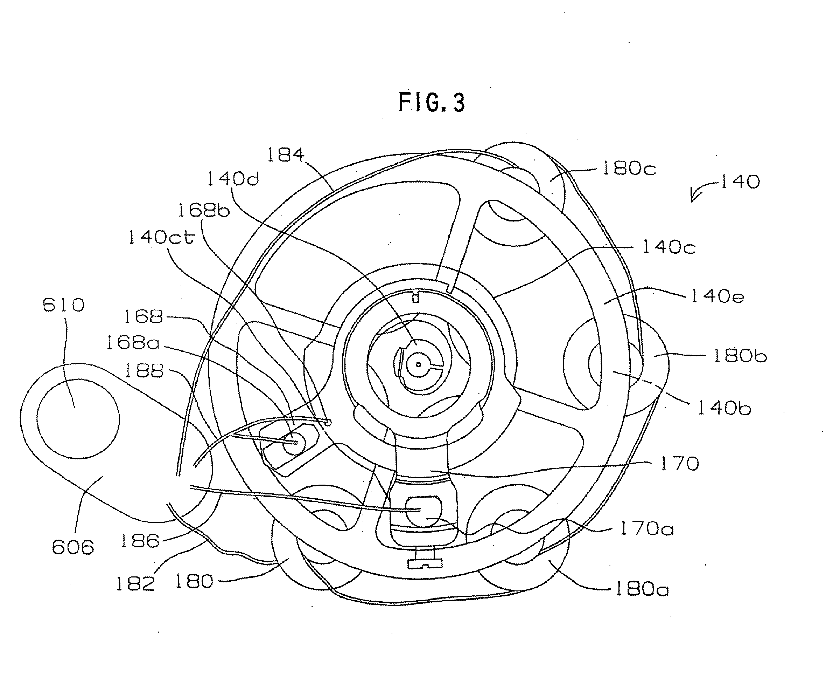

As shown by Fig. 1 and Fig. 3, it is preferable that an interval of the coils in the circumferential direction when a plurality of the coils are arranged, is an interval between an S pole and an N pole of the balance magnet 140e arranged to be opposed to the coils in the circumferential direction multiplied by an integer, however, all of the coils may not be disposed at equal intervals in the circumferential direction. Further, according to the constitution provided with the plurality of coils in this way, wirings among the respective coils may be wired in series such that currents generated at the respective coils by electromagnetic induction are not canceled by each other. Or, the wirings among the respective coils may be wired in parallel with each other such that the currents generated at the respective coils by the electromagnetic induction are not canceled by each other.

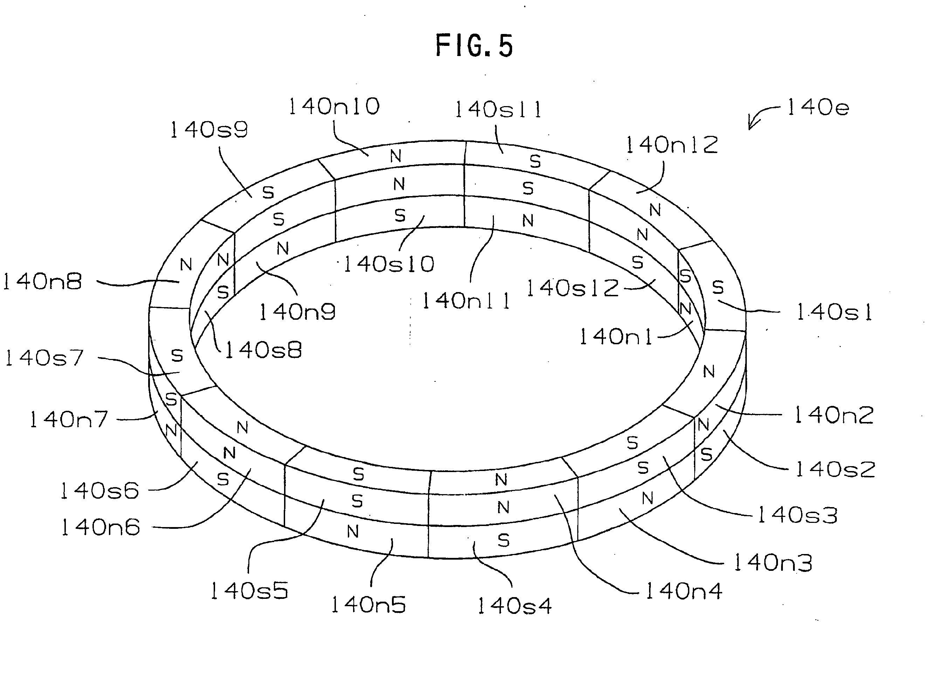

In reference to Fig. 5, the balance magnet 140e is provided with an annular (ring-like shape) and is alternately provided with magnet portions comprising 12 of S poles 140s1 through 140s12 and 12 of N poles 140n1 through 140n12 polarized, for example, in the up and down direction. A number of the magnet portions arranged in the annular shape (ring-like shape) in the balance magnet 140e is 12 according to the example shown in Fig. 5, however, the number may be a plural number of 2 or more. In this case, it is preferable to constitute a length of one chord at the magnet portion substantially equal to an outer diameter of one coil provided to be opposed to the magnet portion.

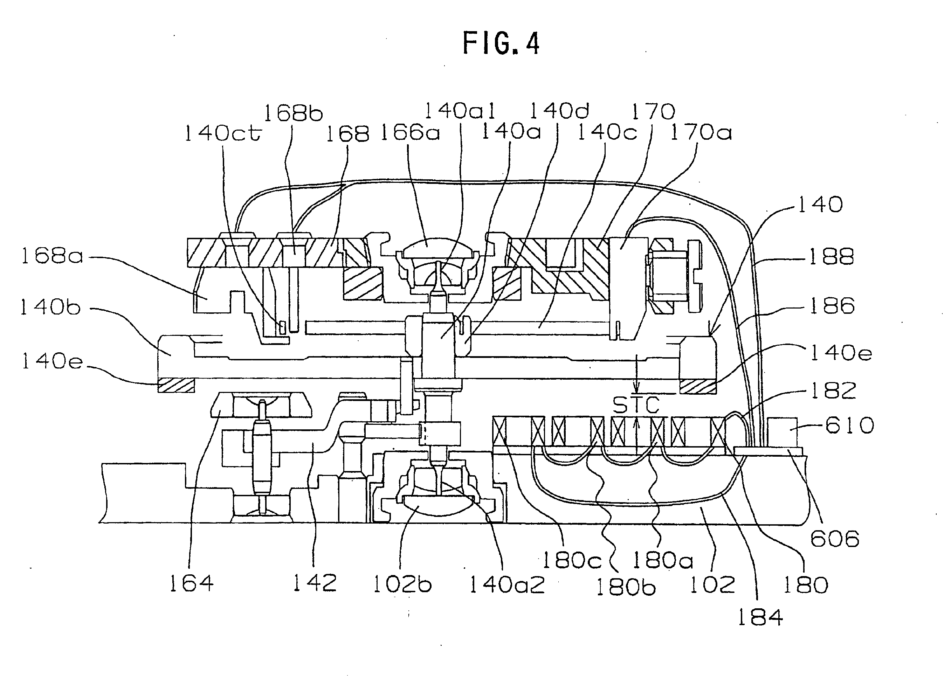

In reference to Fig. 2 and Fig. 4, a gap is provided between the balance magnet 140e and the coils 180, 180a, 180b and 180c. The gap between the balance magnet 140e and the coils 180, 180a, 180b and 180c is determined such that when the coils 180, 180a, 180b and 180c are conducted, magnetic force of the balance magnet 140e can effect influence on the coils 180, 180a, 18Gb and 180c.

When the coils 180, 180a, 180b and 180c are not conducted, the magnetic force of the balance magnet 140e does not effect influence on the coils 180, 180a, 180b and 180c. The balance magnet 140e is fixed to the face of the balance wheel 140b on the side of the main plate by adhesion or the like in a state in which one face thereof is brought into contact with a ring-like rim portion of the balance wheel 140b and other face thereof is opposed to the face of the main plate 102 on the front side.

Further, although in Fig. 4, a thickness of the hairspring 140c (thickness of balance with hairspring in a radius direction) is, for example, 0.021 millimeter although the thickness is illustrated to exaggerate. According to the balance magnet 140e, for example, an outer diameter thereof is about 9 millimeters, an inner diameter thereof is about 7 millimeters and a thickness thereof is about 1 millimeter and a residual magnetic flux density thereof is about 1 tesla. A number of turns of the respective coils 180, 180a, 180b and 180c, is, for example, 1000 turns and a line diameter of the coil is about 25 micrometers. The gap STC between the balance magnet 140e and the coils 180, 180a, 180b and 180c, is, for example, about 0.4 millimeter.

### (3) First embodiment of attitude detecting apparatus

Next, an explanation will be given of an attitude detecting apparatus 610 and a circuit block 606 in a first embodiment of an attitude detecting apparatus in the embodiment of the mechanical timepiece having an attitude detecting apparatus according to the invention.

In reference to Fig. 1 through Fig. 4, the attitude detecting apparatus 610 and the circuit block 606 are arranged on the front side of the main plate 102. The attitude detecting apparatus 610 is attached to the circuit block 606. The circuit block 606 is provided with a plurality of lead terminals.

A first lead line 182 is provided to connect one terminal of the coil 180 and a first lead terminal (not illustrated) of the circuit block 606. Other terminal of the coil 180 is connected to one terminal of the coil 180a. Other terminal of the coil 180a is connected to one terminal of the coil 180b. Other terminal of the coil 180b is connected to one terminal of the coil 180c. That is, the four coils 180, 180a, 180b and 180c are connected in series.

A second lead line 184 is provided to connect other terminal of the coil 180c and a second lead terminal (not illustrated) of the circuit block 606. A third lead line 186 is provided to connect the hairspring holder cap 170 and a third lead terminal (not illustrated) of the circuit block 606. A fourth lead line 188 is provided to connect the first contact member 168a and the second contact member 168b and a fourth lead terminal (not illustrated) of the circuit block 606.

Next, an explanation will be given of structure of the first embodiment of the attitude detecting apparatus according to the invention.

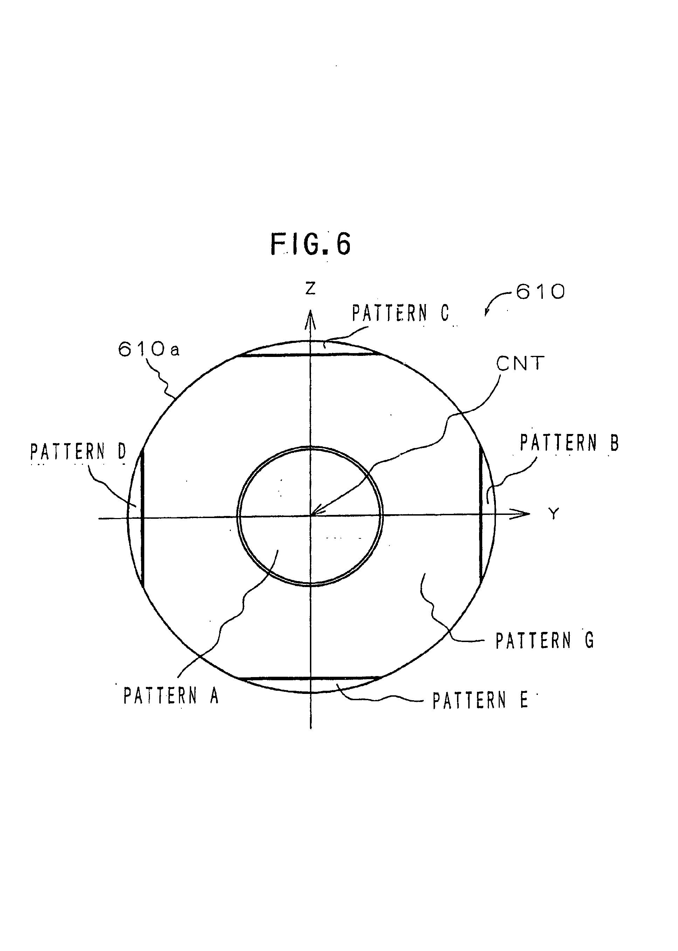

In reference to Fig. 6 through Fig. 10, the attitude detecting apparatus 610 is provided with a case 610a the outer shape of which is substantially spherical.

The case 610a is formed symmetrically in the up and down direction with respect to a central plane 610c. That is, the case 610a includes a case upper half portion 610u substantially in a semispherical shape and a case lower half portion 610d substantially in a semispherical shape. Therefore, the case 610a is formed with the case upper half portion 610u and the case lower half portion 610d symmetrically with respect to the central plane 610c. That is, the case upper half portion 610u and the case lower half portion 610d are formed substantially in the semispherical shape with the same dimensions and shape.

Therefore, for example, the case 610a can be formed by fabricating two of the case upper half portions 610u and bonding the two case upper half portions 610u to each other at portions in correspondence with the central plane 610c. The bonding may be carried out by adhesion, or by welding or by using an adhering tape.

By forming the case 610a in this way, the small-sized and thin-type attitude detecting apparatus 610 can be realized.

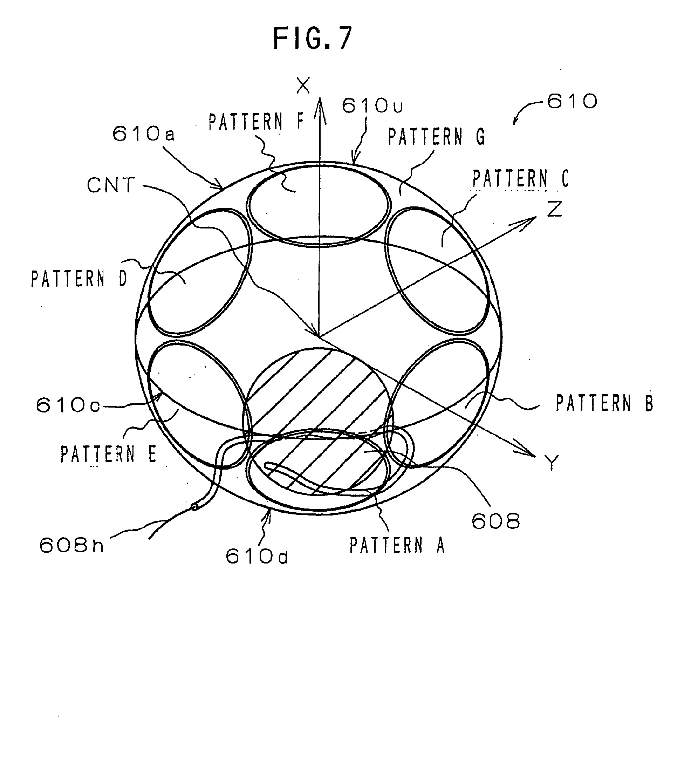

In Fig. 7, the center of the case 610a is defined as an original point CNT, in the horizontal direction, Y-axis line (in Fig. 7, a direction directed to right lower side to direct from front side of paper face toward this side, is defined as positive direction) and Z-axis line (in Fig. 7, a direction directed to right upper side to direct from front side to back side of paper face is defined as positive direction), are defined and X-axis line (in Fig. 7, upper direction is defined as positive direction) is defined in a direction orthogonal to the Y-axis line and the Z-axis line.

The case 610a is formed by plastic such as polyimide, a glass epoxy board, or an insulating material such as quartz.

In reference to Fig. 6 and Fig. 7, pattern A constituting an electrode of the attitude detecting apparatus 610 (hereinafter, simply referred to as "pattern") is provided at an inner face of center of the case lower half portion 610d. Center of pattern A is disposed on the X-axis line (portion directed from the original point CNT in a negative direction of the X-axis line). An outer peripheral portion of pattern A is formed in a circular shape.

Pattern B is formed at the inner face of the case 610a over the case upper half portion 610u and the case lower half portion 610d. Center of pattern B is disposed on the Y-axis line (portion directed from the original point CNT in a positive direction of the Y-axis line). An outer peripheral portion of pattern B is formed in a circular shape.

Pattern C is provided at the inner face of the case 610a over the case upper half portion 610u and the case lower half portion 610d. Center of pattern C is disposed on the Z-axis line (portion directed from the original point CNT in a positive direction of the Z-axis line). An outer peripheral portion of pattern C is formed in a circular shape.

Pattern D is provided at the inner face of the case 610a over the case upper half portion 610u and the case lower half portion 610d. Center of the pattern D is disposed on the Y-axis line (portion directed from the original point CNT in a negative direction of the Y-axis line). An outer peripheral portion of pattern D is formed in a circular shape. Therefore, pattern D is disposed at a position opposed to pattern B at the inner face of the case 610a.

Pattern E is provided at the inner face of the case 610a over the case upper half portion 610u and the case lower half portion 610d. Center of pattern E is disposed on the Z-axis line (portion directed from original point CNT in a negative direction of the Z-axis line). An outer peripheral portion of pattern E is formed in a circular shape. Therefore, pattern E is disposed at a position opposed to pattern C at the inner face of the case 610a.

Pattern F is provided at the inner face of the case 610a in the case upper half portion 610u. Center of pattern F is disposed on the X-axis line (portion directed from the original point CNT in a positive direction of the X-axis line). An outer peripheral portion of pattern F is formed in a circular shape. Therefore, pattern F is disposed at a position opposed to pattern A at the inner face of the case 610a.

Pattern G is provided at the inner face of the case 610a over the case upper half portion 610u and the case lower half portion 610d. Pattern G is disposed over a portion eliminating patterns A, B, C, D, E and F. Therefore, the pattern G is formed with window portions in a circular shape respectively at positions thereof in correspondence with patterns A, B, C, D, E and F.

Shapes of patterns A, B, C, D, E and F are constituted by circular shapes having substantially the same dimensions. Outer diameters of patterns A, B, C, D, E and F are 1/3 of an inner diameter of the case 610a. It is preferable that the outer diameters of patterns A, B, C, D, E and F are 1/5 through 7/10 of the inner diameter of the case 610a.

Respective patterns A, B, C, D, E, F and G are insulated from each other.

As has been explained above, according to the attitude detecting apparatus 610 of the invention, respective six circular patterns A, B, C, D, E and F are arranged to constitute point symmetry on the inner side of the spherical case 610a in the positive direction and the negative direction of the X-axis line, in the positive direction and the negative direction of the Y-axis line and in the positive direction and the negative direction of the Z-axis line.

Aconductor, for example, a spherical metal ball 608 formed by a metal is arranged at inside of the case 610a. The outer diameter of the metal ball 608 is 1/3 of the inner diameter of the case 610a. It is preferable that the outer diameter of the metal ball 608 is 1/4 through 3/4 of the inner diameter of the case 610a. It is preferable that the outer diameter of the metal ball 608 is substantially equal to the outer diameters of patterns A, B, C, D, E and F.

According to the embodiment of the mechanical timepiece having the attitude detecting apparatus of the invention, the attitude detecting apparatus 610 is arranged relative to the main plate 102 such that the Y-axis line and the Z-axis line are in parallel with the surface of the main plate 102 and in parallel with the surface of the dial 104. Therefore, the attitude detecting apparatus 610 is constituted relative to the main plate 102 such that the X-axis line is orthogonal to the surface of the main plate 102 and orthogonal to the surface of the dial plate 104.

In reference to Fig. 7, a metal ball lead line 608h for transmitting a signal from the metal ball 608 is connected to the metal ball 608 and penetrates the case 610a. An outer periphery of the metal ball lead line 608h is coated with an insulating material.

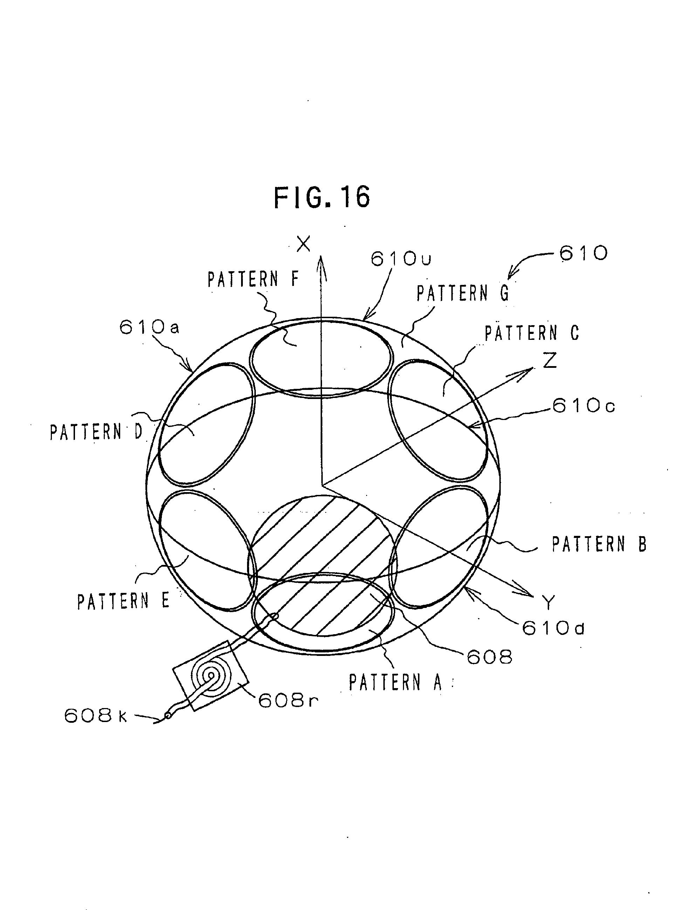

As a modified example, in reference to Fig. 16, a metal ball lead line 608k for transmitting a signal from the metal ball 608 is connected to the metal ball 608 and penetrates the case 610a. There is provided a retractor 608R for retracting the metal ball lead line 608k. The metal ball lead line 608k is retracted by the retractor 608r and is connected to the circuit block 606. In this constitution, it is preferable that retracting force of the retractor 608r is set to a force by which the metal ball 608 cannot be moved from a pattern with which the metal ball 608 is brought into contact.

By providing the retractor 608, there can be effectively prevented a drawback in which the metal ball lead line 608k is slackened at inside of the case 610a and is interposed between the metal ball 608 and the pattern.

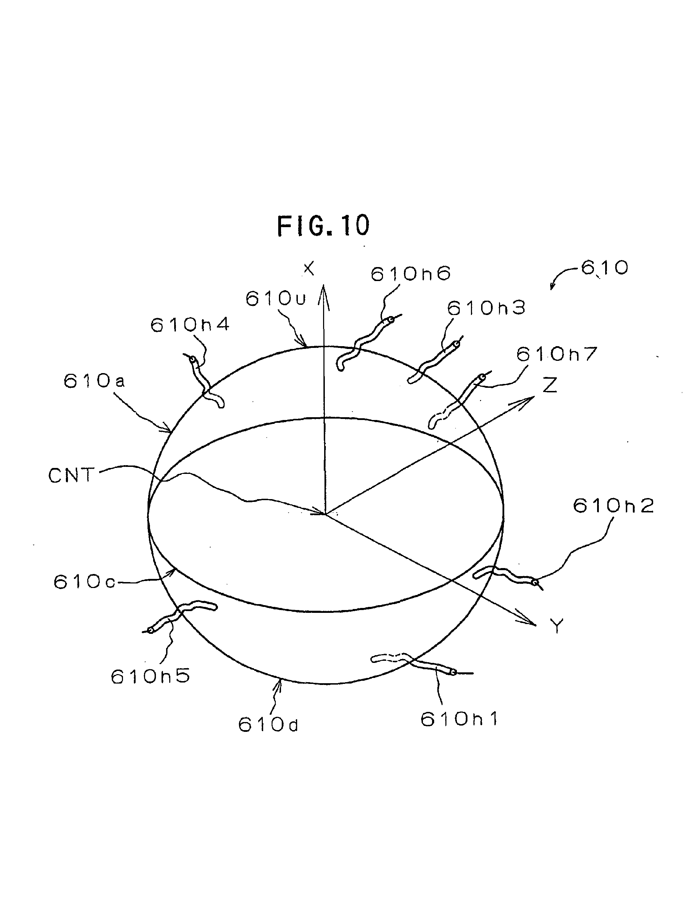

In reference to Fig. 10, lead lines 610h1 through 610h7 are connected to respective patterns A, B, C, D, E, F and G. Outer peripheries of the respective lead lines 610h1 through 610h7 are coated with an insulating material.

In a horizontal state as shown by Fig. 7, the metal ball 608 is brought into contact with pattern A. Therefore, in the state shown by Fig. 7, the metal ball 608 and pattern A are shortcircuited (that is, conducted to each other).

That is, Fig. 7 shows a state of the attitude detecting apparatus 610 when the mechanical timepiece having the attitude detecting apparatus according to the invention is arranged in "flat attitude".

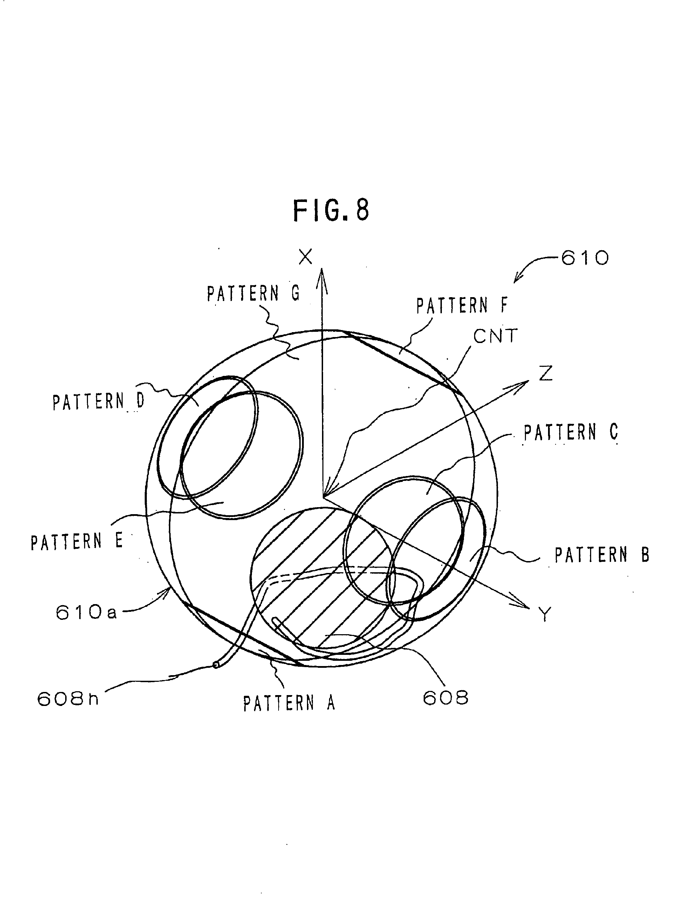

Next, in reference to Fig. 8, in a state in which the attitude detecting apparatus 610 is arranged to be inclined by 45 degree relative to the horizontal face, the metal ball 608 is brought into contact with pattern G. Therefore, in the state shown by Fig. 8, the metal ball 608 and pattern G are shortcircuited (that is, conducted to each other).

That is, Fig. 8 shows the state of the attitude detecting apparatus 610 when the mechanical timepiece having the attitude detecting apparatus according to the invention is arranged in "skewed attitude".

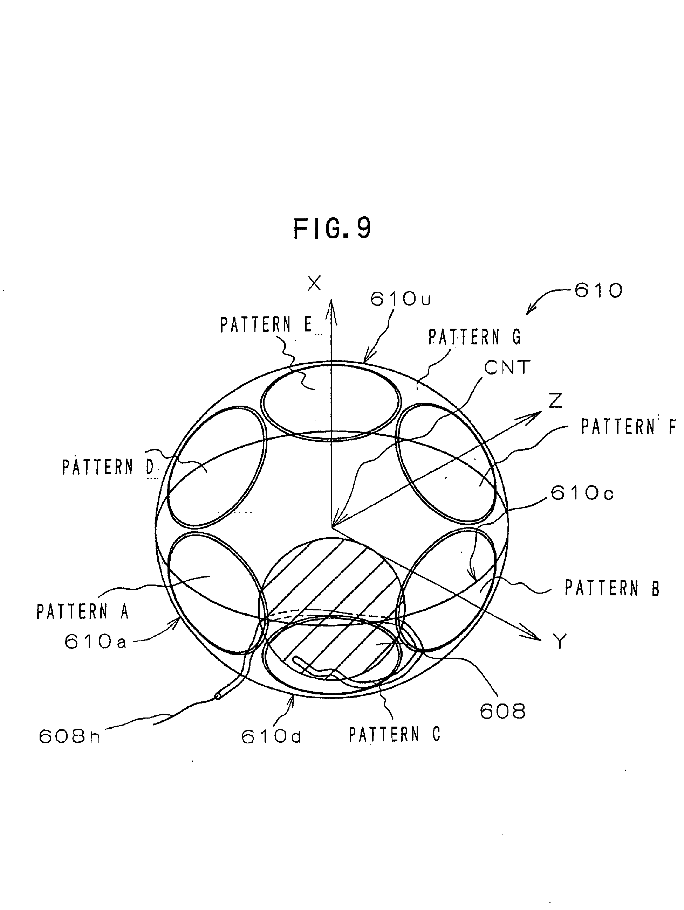

Next, in reference to Fig. 9, in a state in which the attitude detecting apparatus 610 is arranged to constitute 90 degree relative to the horizontal face (orthogonally), the metal ball 608 is brought into contact with pattern C. Therefore, in the state shown by Fig. 9, the metal ball 608 and pattern C are shortcircuited (that is, conducted to each other).

That is, Fig. 9 shows the state of the attitude detecting apparatus 610 when the mechanical timepiece having the attitude detecting apparatus according to the invention is arranged in "erect attitude".

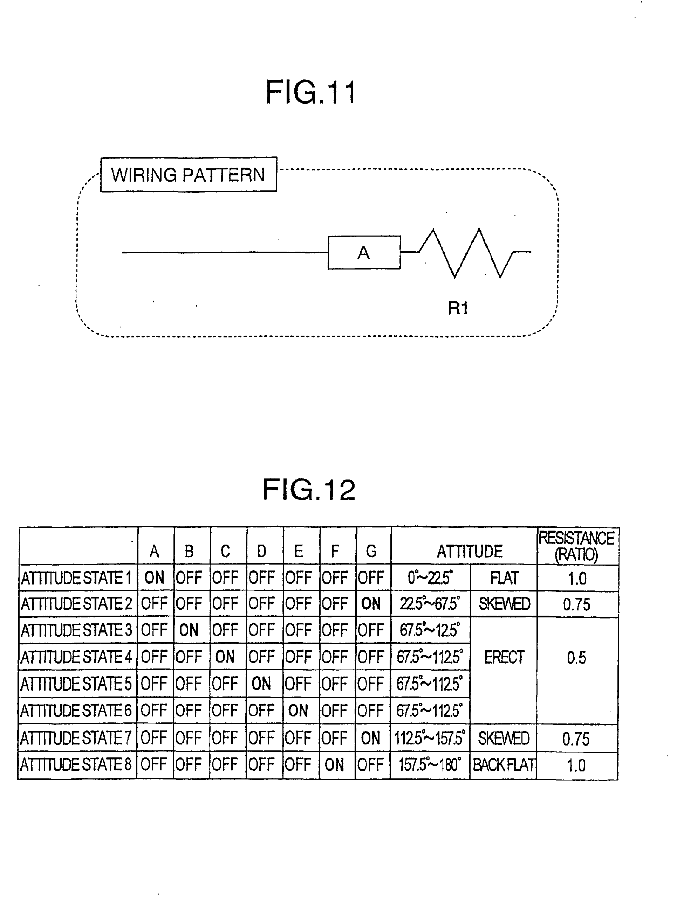

Next, in reference to Fig. 11, in a state shown by Fig. 11, at the circuit block 606, there is formed a wiring pattern such that when the metal ball 608 is conducted to pattern A, a resistor R1 is connected in series with pattern A1. Further, in the state shown by Fig. 11, by the wiring pattern, there is constructed a constitution in which the resistor R1 is connected in series with the four coils 180, 180a, 180b and 180c.

In reference to Fig. 12, according to the first embodiment of the attitude detecting apparatus of the invention, there is shown a relationship between states of conducting various patterns and values of the resistors provided at the circuit.

In Fig. 12, notations A, B, C, D, E, F and G respectively designate pattern A, pattern B, pattern C, pattern D, pattern E, pattern F and pattern G. Notation "ON" designates that the pattern is brought into a state of being conducted with the metal ball 608. Notation "OFF" designates that the pattern is brought into a state of not being conducted with the metal ball 608.

### (3•1) Attitude state 1

Attitude state 1 shown by Fig. 12 corresponds to a case in which the mechanical timepiece having the attitude detecting apparatus according to the invention is in "flat attitude".

Attitude state 1 corresponds to a case in which the mechanical timepiece having the attitude detecting apparatus according to the invention falls in a range of 0 degree through 22.5 degree relative to the horizontal face.

In attitude state 1, there is constructed a constitution in which in the circuit block 606, pattern A and the metal ball 608 are conducted and the resistor R1 is connected in series with pattern A. Further, in attitude state 1, by the wiring pattern, there is constructed a constitution in which the resistor R1 is connected in series with the four coils 180, 180a, 180b and 180c. The value of the resistor R1 in this case is defined as reference value Rref (ohm).

For example, when a synthesized resistance value of the four coils 180, 180a, 180b and 180c is set to 1.7 kiloohm, the reference value Rref is 1.2 kiloohm.

### (3•2) Attitude state 2

Attitude state 2 shown in Fig. 12 corresponds to a case in which the mechanical timepiece having the attitude detecting apparatus according to the invention is in "skewed attitude".

Attitude state 2 corresponds to a case in which the mechanical timepiece having the attitude detecting apparatus according to the invention falls in a range of 22.5° through 67.5° relative to the horizontal face.

In attitude state 2, in the circuit block 606, there is constructed a constitution in which pattern G and the metal ball 608 are conducted and a resistor R2 is conducted in series with pattern G. Further, in attitude state 2, by the wiring pattern, there is constructed a constitution in which the resistor R2 is connected in series with the four coils 180, 180a, 180b and 180c. There is constructed a constitution in which a value of the resistor R2 in this case becomes 0.75 time as much as the reference value Rref (ohm) (that is, 0.75xRref).

### (3•3) Attitude state 3

Attitude state 3 shown in Fig. 12 corresponds to a case in which the mechanical timepiece having the attitude detecting apparatus according to the invention is in "erect attitude".

Attitude state 3 corresponds to a case in which the mechanical timepiece having the attitude detecting apparatus according to the invention falls in a range of 67.5 degree through 112.5 degree relative to the horizontal face.

In attitude state 3, in the circuit block 606, there is constructed a constitution in which pattern B and the metal ball 608 are conducted and a resistor R3 is connected in series with pattern B. Further, in attitude state 3, by the wiring pattern, there is constructed a constitution in which the resistor R3 is connected in series with the four coils 180, 180a, 180b and 180c. There is constructed a constitution in which a value of the resistor R3 in this case becomes 0.5 times as much as the reference value Rref (ohm) (that is, 0.5xRref).

### (3•4) Attitude state 4

Attitude state 4 shown in Fig. 12 corresponds to a case in which the mechanical timepiece having the attitude detecting apparatus according to the invention is in "erect attitude".

Attitude state 4 corresponds to a case in which the mechanical timepiece having the attitude detecting apparatus according to the invention falls in a range of 67.5 degree through 112.5 degree relative to the horizontal face.

In attitude state 4, in the circuit block 606, there is constructed a constitution in which pattern C and the metal ball 608 are conducted and the resistor R3 is connected in series with pattern C. Further, in attitude state 4, by the wiring pattern, there is constructed a constitution in which the resistor R3 is connected in series with the four coils 180, 180a, 180b and 180c. There is constructed a constitution in which a value of the resistor R3 in this case becomes 0.5 times as much as the reference value Rref (ohm) (that is, 0.5xRref).

### (3•5) Attitude state 5

Attitude state 5 shown in Fig. 12 corresponds to a case in which the mechanical timepiece having the attitude detecting apparatus according to the invention is in "erect attitude".

Attitude state 5 corresponds to a case in which the mechanical timepiece having the attitude detecting apparatus according to the invention falls in a range of 67.5 degree through 112.5 degree relative to the horizontal face.

In attitude state 5, in the circuit block 606, there is constructed a constitution in which pattern D and the metal ball 608 are conducted and the resistor R3 is connected in series with pattern D. Further, in attitude state 5, by the wiring pattern, there is constructed a constitution in which the resistor R3 is connected in series with the four coils 180, 180a, 180b and 180c. There is constructed a constitution in which a value of the resistor R3 in this case becomes 0.5 times as much as the reference value Rref (ohm) (that is, 0.5xRref).

### (3•6) Attitude state 6

Attitude state 6 shown in Fig. 12 corresponds to a case in which the mechanical timepiece having the attitude detecting apparatus according to the invention is in "erect attitude".

Attitude state 6 corresponds to a case in which the mechanical timepiece having the attitude detecting apparatus according to the invention falls in a range of 67.5 degree through 112.5 degree relative to the horizontal face.

In attitude state 6, in the circuit block 606, there is constructed a constitution in which pattern E and the metal ball 608 are conducted and the resistor R3 is connected in series with pattern E. Further, in attitude state 6, by the wiring pattern, there is constructed a constitution in which the resistor R3 is connected in series with the four coils 180, 180a, 180b and 180c. There is constructed a constitution in which a value of the resistor R3 in this case becomes 0.5 times as much as the reference value Rref (ohm) (that is, 0.5xRref).

### (3•7) Attitude state 7

Attitude state 7 shown in Fig. 12 corresponds to a case in which the mechanical timepiece having the attitude detecting apparatus according to the invention is in "skewed attitude".

Attitude state 7 corresponds to a case in which the mechanical timepiece having the attitude detecting apparatus according to the invention falls in a range of 112.5 degree through 157.5 degree relative to the horizontal face.

In attitude state 7, in the circuit block 606, there is constructed a constitution in which pattern G and the metal ball 608 are conducted and the resistor R2 is connected in series with pattern G. Further, in attitude state 7, by the wiring pattern, there is constructed a constitution in which the resistor R2 is connected in series with the four coils 180, 180a, 180b and 180c. There is constructed a constitution in which a value of the resistor R2 in this case becomes 0.75 times as much as the reference value Rref (ohm) (that is, 0.75xRref).

### (3•8) Attitude state 8

Attitude state 8 shown in Fig. 12 corresponds to a case in which the mechanical timepiece having the attitude detecting apparatus according to the invention is in "back flat attitude".

Attitude state 8 corresponds to a case in which the mechanical timepiece having the attitude detecting apparatus according to the invention falls in a range of 157.5 degree through 180 degree relative to the horizontal face.

In attitude state 8, in the circuit block 606, there is constructed a constitution in which pattern F and the metal ball 608 are conducted and the resistor R1 is connected in series with pattern F. Further, in attitude state 8, by the wiring pattern, there is constructed a constitution in which the resistor R1 is connected in series with the four coils 180, 180a, 180b and 180c. There is constructed a constitution in which a value of the resistor R1 in this case becomes the reference value Rref.

### (3•12) Table in other embodiment

Also in other embodiment of the attitude detecting apparatus according to the invention, there can be formed a table of a relationship between states of conducting the metal ball with various patterns and a value of resistor provided in the circuit block. Therefore, also with regard to other embodiment of the attitude detecting apparatus, similar to the above-described content of Fig. 12, wirings of the circuit block and values of the resistor can be determined.

### (4) Operation of balance with hairspring

### (4•1) When coil is not conducted:

An explanation will be given of operation of the balance with hairspring 140 when the coils 180, 180a, 180b and 180c are not conducted, that is, when the circuit is opened in reference to Fig. 3, Fig. 4 and Fig. 13.

The hairspring 140c is expanded and contracted in the radius direction of the hairspring 140c in accordance with rotational angle of rotating the balance with hairspring 140. For example, in the state shown by Fig. 3, when the balance with hairspring 140 is rotated in the clockwise direction, the hairspring 140c is contracted in a direction toward the center of the balance with hairspring 140, in contrast thereto, when the balance with hairspring 140 is rotated in the counterclockwise direction, the hairspring 140c is expanded in a direction remote from the center of the balance with hairspring 140.

Therefore, in Fig. 3, when the balance with hairspring 140 is rotated in the clockwise direction, the hairspring 140c is operated to be proximate to the second contact member 168b. In contrast thereto, when the balance with hairspring 140 is rotated in the counterclockwise direction, the hairspring 140c is operated to be proximate to the first contact member 168a.

When the rotational angle (swing angle) of the balance with hairspring 140 is less than a constant threshold, for example, 180 degree, since an amount of expanding and contracting the hairspring 140c in the radius direction is small, the hairspring 140c is not brought into contact with the first contact member 168a, nor in contact with the second contact member 168b.

When the rotational angle (swing angle) of the balance with hairspring 140 is equal to or larger than a constant threshold, for example, 180 degree, the amount of expanding and contracting the hairspring 140c in the radius direction becomes sufficiently large and therefore, the hairspring 140c is brought into contact with both of the first contact member 168a and the second contact member 168b.

For example, a portion 140ct of the hairspring 140c proximate to an outer end portion thereof is disposed within a clearance of 0.04 millimeter between the first contact member 168a and the second contact member 168b. Therefore, in a state in which the swing angle of the balance with hairspring 140 falls in a range of exceeding 0 degree and less than 180 degree, the portion 140ct of the hairspring 140c proximate to the outer end portion is not brought into contact with the first contact member 168a, nor into contact with the second contact member 168b. That is, the outer end portion of the hairspring 140c is not brought into contact with the first contact member 168a, nor into contact with the second contact member 168b and therefore, the coils 180, 180a, 180b and 180c are not conducted, the magnetic flux of the balance magnet 140e does not effect influence on the coils 180, 180a, 180b and 180c. As a result, the swing angle of the balance with hairspring 140 is not attenuated by operation of the balance magnet 140e and the coils 180, 180a, 180b and 180c.

### (4•2) When coil is conducted:

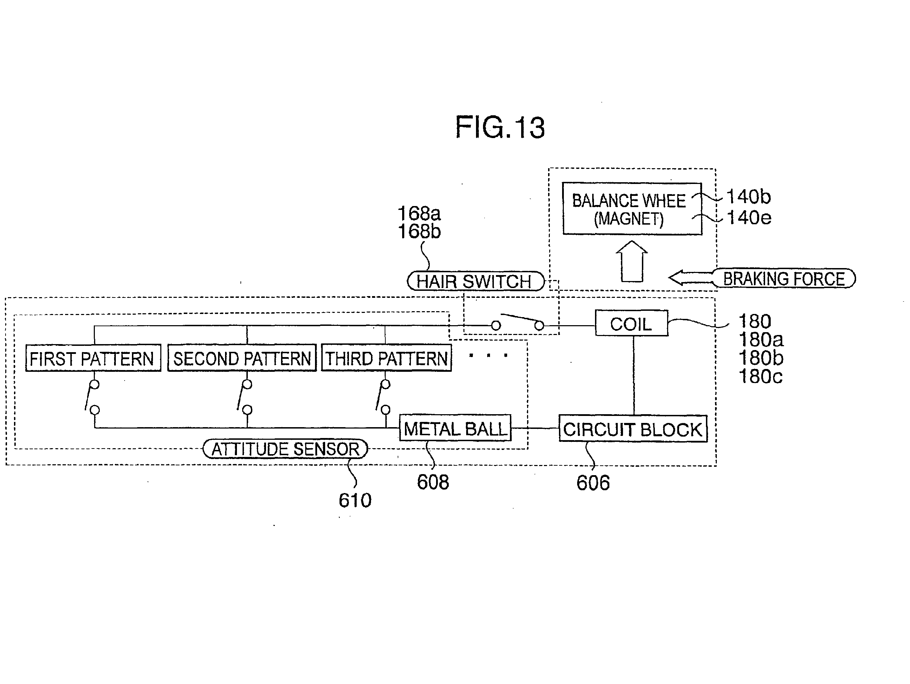

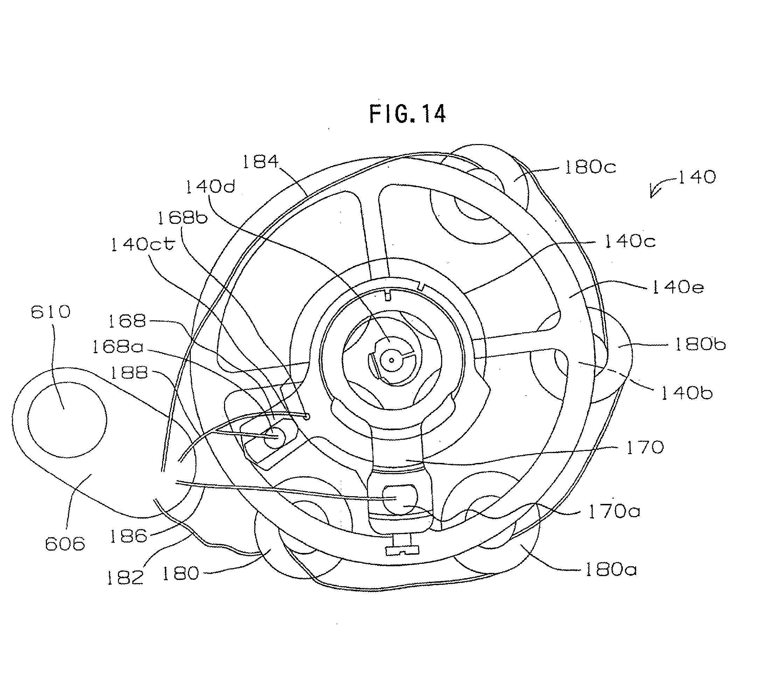

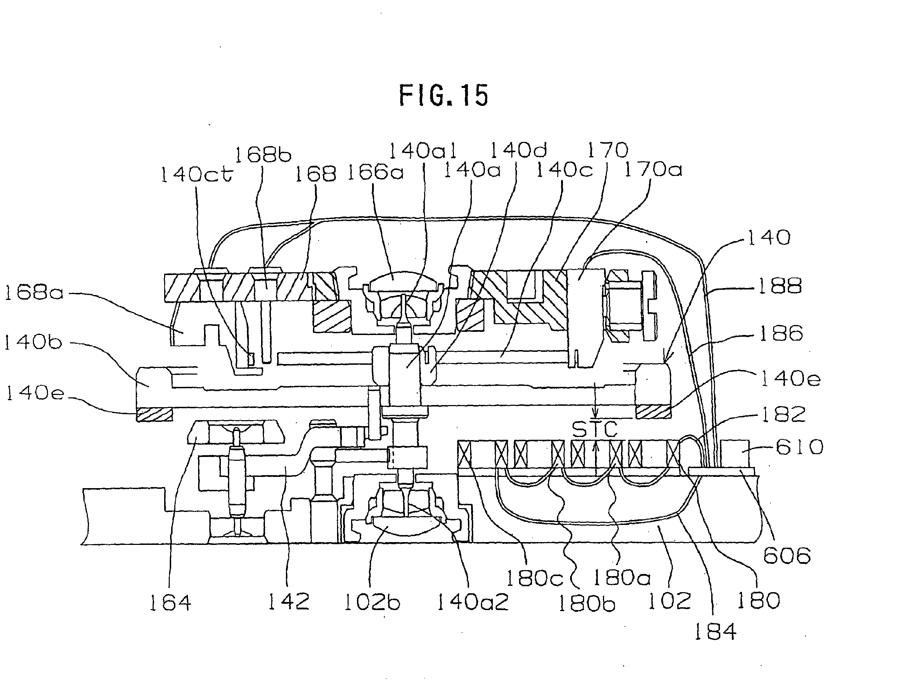

Next, an explanation will be given of operation of the balance with hairspring 140 when the coils 180, 180a, 180b and 180c are conducted, that is, when the circuit is closed in reference to Fig. 13, Fig. 14 and Fig. 15. That is, Fig. 14 and Fig. 15 show a case when the swing angle of the balance with hairspring 140 is equal to or larger than 180 degree.

Further, in Fig. 15, the thickness of the hairspring 140c (thickness of balance with hairspring in the radius direction) is illustrated to exaggerate.

When the swing angle of the balance with hairspring 140 becomes equal to or larger than 180 degree, the portion 140ct of the hairspring 140c proximate to the outer end portion is brought into contact with the first contact member 168a or the second contact member 168b. Under the state, the coils 180, 180a, 180b and 180c are conducted and exert a force for restraining rotational movement of the balance with hairspring 140 on the balance with hairspring 140 by induction current generated by changing the magnetic flux of the balance magnet 140e. Further, by the operation, brake force for restraining rotation of the balance with hairspring 140 is exerted to the balance with hairspring 140 to thereby reduce the swing angle of the balance with hairspring 140.

Further, when the swing angle of the balance with hairspring 140 is reduced to the range exceeding 0 degree and less than 180 degree, the portion 140ct of the hairspring 140c proximate to the outer end portion is brought into a state of not being brought into contact with the first contact member 168a and not being brought into contact with the second contact member 168b. Therefore, as shown by Fig. 3 and Fig. 4, the outer end portion of the hairspring 140c is not brought into contact with the first contact member 168a and is not brought into contact with the second contact member 168b and therefore, the coils 180, 180a, 180b and 180c are not conducted and the magnetic flux of the balance magnet 140e does not effect influence on the coils 180, 180a, 180b and 180c.

When the coils 180, 180a, 180b and 180c are conducted, that is, when the circuit is closed, in a state in which the mechanical timepiece having the attitude detecting apparatus according to the invention is in "flat attitude", the resistor R1 is connected in series with the four coils 180, 180a, 180b and 180c. Therefore, under the state, the coils 180, 180a, 180b and 180c and the resistor R1 are conducted. Further, the force for restraining rotational movement of the balance with hairspring 140 is exerted to the balance with hairspring 140 by induction current generated by changing the magnetic flux of the balance magnet 140e. That is, in order to restrain rotation of the balance with hairspring 140, the brake force having a magnitude in correspondence with the value Rref (ohm) of the resistor is exerted to the balance with hairspring 140 to thereby reduce the swing angle of the balance with hairspring 140.

When the coils 180, 180a, 180b and 180c are conducted, that is, when the circuit is closed, in a state in which the mechanical timepiece having the attitude detecting apparatus of the invention is not in "flat attitude", nor in "back flat attitude", not in "erect attitude", the resistor R2 is connected in series with the four coils 180, 180a, 180b and 180c. The value of the resistor R2 in this case is 0.75 times as much as the reference value Rref (ohm) (that is, 0.75xRref).

Under the state, the coils 180, 180a, 180b and 180c and the resistor R2 are conducted. Further, the force for restraining rotational movement of the balance with hairspring 140 is exerted to the balance with hairspring 140 by induction current generated by changing the magnetic flux of the balance magnet 140e. That is, in order to restrain rotation of the balance with hairspring 140, brake force having a magnitude in correspondence with the value 0.75×Rref (ohm) of the resistor is exerted to the balance with hairspring 140 to thereby reduce the swing angle of the balance with hairspring 140.

By setting the value of the resistor in this way, according to the mechanical timepiece having the attitude detecting apparatus of the invention, there is constructed a constitution in which brake force in the state in which the mechanical timepiece is not in "erect attitude", nor in "flat attitude", nor in "back flat attitude", becomes smaller than brake force in states in which the mechanical timepiece having the attitude detecting apparatus of the invention are in "flat attitude" and "back flat attitude". Further, according to the mechanical timepiece having the attitude detecting apparatus of the invention, there is constructed a constitution in which brake force in a state in which the mechanical timepiece is not in "erect attitude", nor in "flat attitude", nor in "back flat attitude", becomes larger than brake force in a state in which the mechanical timepiece having the attitude detecting apparatus according to the invention is in "erect attitude".

When the coils 180, 180a, 180b and 180c are conducted, that is, when the circuit is closed, in the state in which the mechanical timepiece having the attitude detecting apparatus of the invention is in "erect attitude", the resistor R3 is connected in series with the four coils 180, 180a, 180b and 180c. The value of the resistor R3 in this case is 0.5 times as much as the reference value Rref (ohm) (that is, 0.5xRref).

Under the state, the coils 180, 180a, 180b and 180c and the resistor R3 are conducted. Further, the force for restraining rotational movement of the balance with hairspring 140 is exerted to the balance with hairspring 140 by induction current generated by changing the magnetic flux of the balance magnet 140e. That is, in order to restrain rotation of the balance with hairspring 140, brake force having a magnitude in correspondence with the value 0.5×Rref (ohm) of the resistor is exerted to the balance with hairspring 140 to thereby reduce the swing angle of the balance with hairspring 140.

By setting the value of the resistor in this way, according to the mechanical timepiece having the attitude detecting apparatus of the invention, there is constructed a constitution in which the brake force in the state in which the mechanical timepiece is in "erect attitude", becomes smaller than the brake force in the states in which the mechanical timepiece having the attitude detecting apparatus according to the invention are in "flat attitude" and in "back flat attitude".

According to the mechanical timepiece having the attitude detecting apparatus of the invention constituted in this way, in correspondence with various attitudes of the mechanical timepiece, the rotational angle of the balance with hairspring 140 can be controlled extremely accurately.

According to the invention, as has been explained, in the mechanical timepiece constituted to include the balance with hairspring repeating right rotation and left rotation, the escape wheel & pinion rotating based on rotation of the front train wheel and the pallet fork for controlling rotation of the escape wheel & pinion based on operation of the balance with hairspring, the escapement and speed control apparatus is constituted to be capable of controlling the rotational angle of the balance with hairspring in correspondence with various attitudes of the mechanical timepiece and accordingly, accuracy of the mechanical timepiece can be promoted without reducing the duration time period of the mechanical timepiece.

That is, according to the invention, attention is paid to the correlation between the instantaneous rate and the swing angle and the swing angle is maintained constant by controlling the rotational angle of the balance with hairspring in correspondence with various attitudes of the mechanical timepiece to thereby restrain the change of the instantaneous rate and adjust the mechanical timepiece such that gain or loss per day is reduced.

In contrast thereto, according to the conventional mechanical timepiece, by the relationship between the duration time period and the swing angle, the swing angle is changed with elapse of time. Further, by the relationship between the swing angle and the instantaneous rate, the instantaneous rate is changed with elapse of time. Further, by the relationship between the attitude and the instantaneous rate of the mechanical timepiece, the instantaneous rate is changed with elapse of time.

Therefore, it has been difficult to prolong the duration time period of the mechanical timepiece capable of maintaining constant accuracy.

### (5) Second embodiment of attitude detecting apparatus

Next, an explanation will be given of an attitude detecting apparatus 620 according to a second embodiment of an attitude detecting apparatus of the invention in the embodiment of the mechanical timepiece having the attitude detecting apparatus of the invention.

The following explanation will be given of a point in which the second embodiment of the attitude detecting apparatus according to the invention differs from the first embodiment of the attitude detecting apparatus according to the invention. Therefore, with regard to portions other than content described below, the above-described explanation with regard to the first embodiment of the attitude detecting apparatus according to the invention will be applied here.

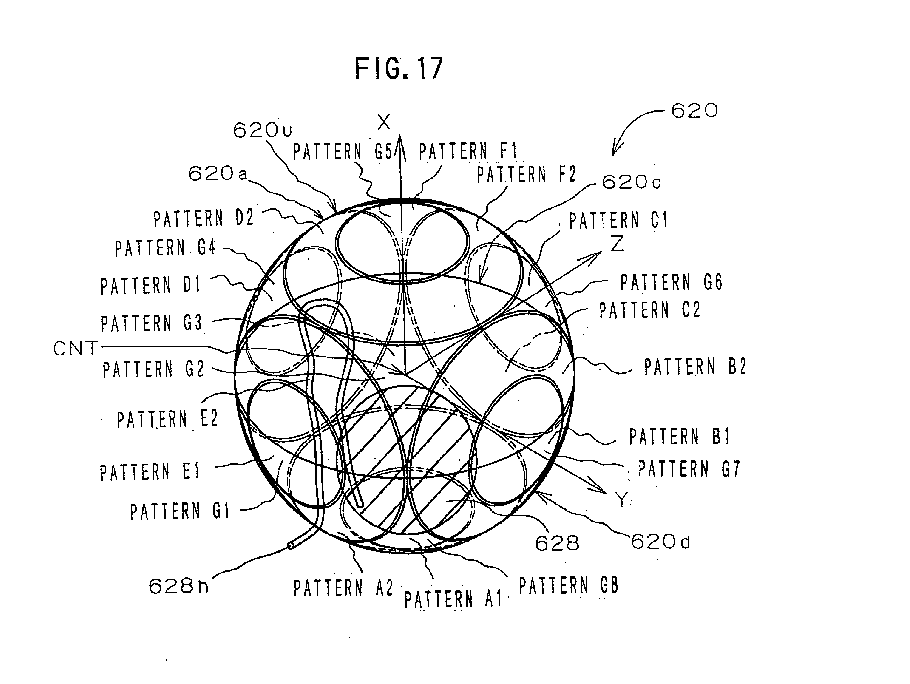

In reference to Fig. 17, the attitude detecting apparatus 620 is provided with a case 620a the outer shape of which is substantially spherical.

The case 620a is formed symmetrically in the up and down direction with respect to a central plane 620c. That is, the case 620a includes a case upper half portion 620u substantially in a semispherical shape and a case lower half portion 620d substantially in a semispherical shape. Therefore, according to the case 620a, the case upper half portion 620u and the case lower half portion 620d are formed symmetrically with respect to a central plane 620c. That is, the case upper half portion 620u and the case lower half portion 620d are formed substantially in the semispherical shape with the same dimensions and shape.

Therefore, for example, the case 620a can be formed by fabricating two of the case upper half portions 620u and bonding the two case upper half portions 620u to each other at portions thereof in correspondence with the central plane 620c. The bonding may be carried out by adhesion, or by welding, or by using an adhering tape.

By forming the case 620a in this way, there can be realized the small-sized thin-type attitude detecting apparatus 620.

In Fig. 17, center of the case 620a is constituted by an original point CNT, Y-axis line (in Fig. 17, a direction directed to right lower side to direct from front side of paper face to this side is defined as a positive direction) and a Z-axis line (in Fig. 17, a direction directed to right upper side to direct from front side to back side of paper face is designed as a positive direction), are defined in horizontal directions and an X-axis line (in Fig. 17, an upper direction is defined as a positive direction) is defined in a direction orthogonal to the Y-axis line and the Z-axis line.

The case 620a is formed by plastic such as polyimide or the like, glass epoxy board, or an insulating material such as quartz.

Pattern A1 of the attitude detecting apparatus 620 is provided at an inner face of center of the case lower half portion 620d. Center of the pattern A1 is disposed on the X-axis line (portion directed from original point CNT in a negative direction of the X-axis line). An outer peripheral portion of pattern A1 is formed in a circular shape.

Pattern A2 is provided on an outer side of pattern A1 at the inner face of the case lower half portion 620d. Center of pattern A2 is disposed on the X-axis line (portion directed from the original point CNT in the negative direction of the X-axis line). Pattern A2 is formed in a ring-like shape. Pattern A2 is arranged to be concentric with pattern A1.

Pattern B1 is provided at the inner face of the case 620a over the case upper half portion 620u and the case lower half portion 620d. Center of pattern B1 is disposed on the Y-axis line (portion directed from the original point CNT in a positive direction of the Y-axis line). An outer peripheral portion of pattern B1 is formed in a circular shape.

Pattern B2 is formed on an outer side of pattern B1 at the inner face of the case 620a over inner faces of the case upper half portion 620u and the case lower half portion 620d. Center of pattern B2 is disposed on the Y-axis line (portion directed from the original point CNT in a positive direction of the Y-axis line). Pattern B2 is formed in a ring-like shape. The pattern B2 is arranged to be concentric with pattern B1.

Pattern C1 is arranged at the inner face of the case 620a over the case upper half portion 620u and the case lower half portion 620d. Center of pattern C1 is disposed on the Z-axis line (portion directed from original point CNT in a positive direction of the Z-axis line). An outer peripheral portion of pattern C1 is formed in a circular shape.

Pattern C2 is provided on an outer side of pattern C1 at the inner face of the case 620a over the inner faces of the case upper half portion 620u and the case lower half portion 620d. Center of pattern C2 is disposed on the Z-axis line (portion directed from the original point CNT in the positive direction of the Z-axis line). Pattern C2 is formed in a ring-like shape. Pattern C2 is arranged to be concentric with pattern C1.

Pattern D1 is provided at the inner face of the case 620a over the case upper half portion 620u and the case lower half portion 620d. Center of pattern D1 is disposed on the Y-axis line (portion directed from the original point CNT in a negative direction of the Y-axis line). An outer peripheral portion of pattern D1 is formed in a circular shape. Pattern D1 is disposed at a position opposed to Pattern B1 at the inner face of the case 620a.

Pattern D2 is provided on an outer side of pattern D1 at the inner face of the case 620a over the inner faces of the case upper half portion 620u and the case lower half portion 620d. Center of pattern D2 is disposed on the Y-axis line (portion directed from the original point CNT in the negative direction of the Y-axis line). Pattern D2 is formed in a ring-like shape. Pattern D2 is arranged to be concentric with pattern D1. Pattern D2 is disposed at a position opposed to the pattern B2 at the inner face of the case 620a.

Pattern E1 is provided at the inner face of the case 620a over the case upper half portion 620u and the case lower half portion 620d. Center of pattern E1 is disposed on the Z-axis line (portion directed from the original point CNT in a negative direction of the Z-axis line). An outer peripheral portion of pattern E1 is formed in a circular shape. Pattern E1 is disposed at a position opposed to pattern C1 at the inner face of the case 620a.

Pattern E2 is provided on an outer side of pattern E1 at the inner face of the case 620a over the inner faces of the case upper half portion 620u and the case lower half portion 620d. Center of pattern E2 is disposed on the Z-axis line (portion directed from the original point CNT in the negative direction of the Z-axis line). Pattern E2 is formed in a ring-like shape. Pattern E2 is arranged to be concentric with pattern E1. Pattern E2 is disposed at a position opposed to pattern C2 at the inner face of the case 620a.

Pattern F1 is provided at the inner face of the case 620a in the case upper half portion 620u. Center of pattern F1 is disposed on the X-axis line (portion directed from the original point CNT in a positive direction of the X-axis line). An outer peripheral portion of pattern F1 is formed in a circular shape. Pattern F1 is disposed at a position opposed to pattern A1 at the inner face of the case 620a.

Pattern F2 is provided on an outer side of Pattern F1 at the inner face of the case 620a in the case upper half portion 620u. Center of pattern F2 is disposed on the X-axis line (portion directed from the original point CNT in the positive direction of the X-axis line). Pattern F2 is formed in a ring-like shape. Pattern F2 is arranged to be concentric with pattern F1. Pattern F2 is disposed at a position opposed to pattern A2 at the inner face of the case 620a.

Pattern G1 is provided at the inner face of the case 620a in the case lower half portion 620d. Pattern G1 is disposed at a portion surrounded by pattern A2, pattern D2 and pattern E2.

Pattern G2 is provided at the inner face of the case 620a in the case upper half portion 620u. Pattern G2 is disposed at a portion surrounded by pattern B2, pattern E2 and pattern F2.

Pattern G3 is provided at the inner face of the case 620a in the case lower half portion 620d. Pattern G3 is disposed at a portion surrounded by pattern A2, pattern C2 and pattern D2.

Pattern G4 is provided at the inner face of the case 620a in the case upper half portion 620u. Pattern G4 is disposed at a portion surrounded by pattern D2, pattern E2 and pattern F2.

Pattern G5 is provided at the inner face of the case 620a in the case upper half portion 620u. Pattern G5 is disposed at a portion surrounded by pattern C2, pattern D2 and pattern F2.

Pattern G6 is provided at the inner face of the case 620a in the case upper half portion 620u. Pattern G6 is disposed at a portion surrounded by pattern B2, pattern C2 and pattern F2.

Pattern G7 is provided at the inner face of the case 620a in the case lower half portion 620d. Pattern G7 is disposed at a portion surrounded by pattern A2, pattern B2 and pattern C2.

Pattern G8 is provided at the inner face of the case 620a in the case lower half portion 620d. Pattern G8 is disposed at a portion surrounded by pattern A2, pattern B2 and pattern E2.

Shapes of patterns G1, G2, G3, G4, G5, G6, G7 and G8 are substantially the same.

Shapes of patterns A1, B1, C1, D1, E1 and F1 are circular shapes having substantially the same dimensions. Outer diameters of patterns A1, B1, C1, D1, E1 and F1 are 1/3 of an inner diameter of the case 620a. It is preferable that the outer diameters of patterns A1, B1, C1, D1, E1 and F1 are 1/5 through 1/3 of the inner diameter of the case 620a.

Shape of patterns A2, B2, C2, D2, E2 and F2 are ring-like shapes having substantially the same dimensions. Outer diameters of patterns A2, B2, C2, D2, E2 and F2 are 1/2 of the inner diameter of the case 620a. It is preferable that the outer diameters of patterns A2, B2, C2, D2, E2 and F2 are 1/3 through 7/10 of the inner diameter of the case 620a. The outer diameter of patterns A2, B2, C2, D2, E2 and F2 are 3/2 of the outer diameters of patterns A1, B1, C1, D1, E1 and F1. It is preferable that the outer diameters of patterns A2, B2, C2, D2, E2 and F2 are 3/2 through 2/1 of the outer diameters of patterns A1, B1, C1, D1, E1 and F1.

The respective patterns are insulated from each other.

As has been explained above, according to the attitude detecting apparatus 620 of the invention, the respective six circular patterns A1, B1, C1, D1, E1 and F1 are arranged to constitute point symmetry on an inner side of the spherical case 620a in the positive direction and the negative direction of the X-axis line, in the positive direction and the negative direction of the Y-axis line and in the positive direction and the negative direction of the Z-axis line.

Further, according to the attitude detecting apparatus 620 of the invention, the respective six ring-like patterns A2, B2, C2 , D2 , E2 and F2 are arranged to constitute point symmetry on the inner side of the spherical case 620a in the positive direction and the negative direction of the X-axis line, in the positive direction and the negative direction of the Y-axis line and in the positive direction and the negative direction of the Z-axis line.

A conductor, for example, a metal ball 628 in a spherical shape formed by a metal is arranged at inside of the case 620a. An outer diameter of the metal ball 628 is 1/3 of the inner diameter of the case 620a. It is preferable that the outer diameter of the metal ball 628 is 1/4 through 3/4 of the inner diameter of the case 620a. It is preferable that the outer diameter of the metal ball 628 is substantially equal to the outer diameters of patterns A1, B1, C1, D1, E1 and F1.

According to the embodiment of the mechanical timepiece having the attitude detecting apparatus of the invention, the attitude detecting apparatus 620 is arranged relative to the main plate 102 such that the X-axis line and the Y-axis line are in parallel with the surface of the main plate 102 and in parallel with the surface of the dial 104. Therefore, the attitude detecting apparatus 620 is constituted relative to the main plate 102 such that the Z-axis line is orthogonal to the surface of the main plate 102 and orthogonal to the surface of the dial 104.

Similar to the lead lines shown by Fig. 10, lead lines (not illustrated) for transmitting signals from the patterns are respectively connected to patterns A1, B1, C1, D1, E1, F1, A2, B2, C2, D2, E2, F2, G1, G2, G3, G4, G5, G6, G7 and G8.

In reference to Fig. 17, a metal ball lead line 628h for transmitting a signal from the metal ball 618 is connected to the metal ball 628 and penetrates the case 620a. An outer periphery of the metal ball lead line 628h is coated with an insulating material.

In the horizontal state as shown by Fig. 17, the metal ball 628 is brought into contact with pattern A1. Therefore, in the state shown by Fig. 17, the metal ball 628 and pattern A1 are shortcircuited (that is, conducted to each other).

That is, Fig. 17 shows a state of the attitude detecting apparatus 620 when the mechanical timepiece having the attitude detecting apparatus according to the invention is arranged in "flat attitude".

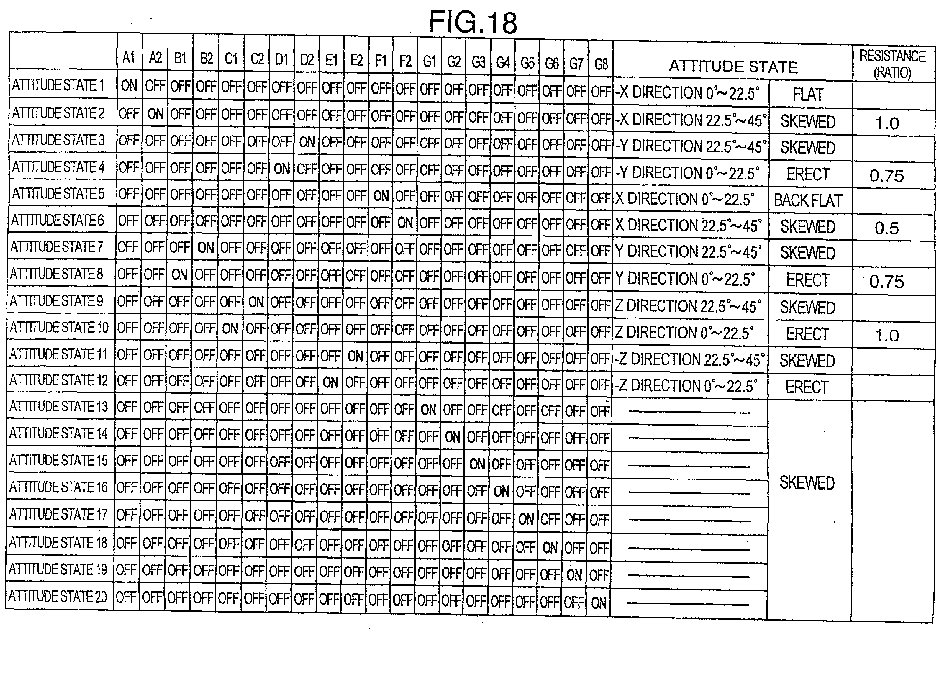

In reference to Fig. 18, there is shown a relationship among various patterns, states of conducting patterns and values of resistors provided at the circuit according to the second embodiment of the attitude detecting apparatus of the invention.

Items and contents thereof described in Fig. 18 are the same as items and content described in Fig. 12, mentioned above.

### (5•1) Attitude state 1

Attitude state 1 shown in Fig. 18 corresponds to a case in which the mechanical timepiece having the attitude detecting apparatus according to the invention is in "flat attitude".

Attitude state 1 corresponds to a case in which the mechanical timepiece having the attitude detecting apparatus according to the invention falls in a range of 0 degree through 22.5 degree relative to the negative direction of the X-axis line (-X direction).

In attitude state 1, in the circuit block 606, there is constructed a constitution in which pattern A1 and the metal ball 628 are conducted and the resistor R1 is connected in series with pattern A1. Further, in attitude state 1, by the wiring pattern, there is constructed a constitution in which the resistor R1 is connected in series with the four coils 180, 180a, 180b and 180c. The value of the resistor R1 in this case is defined as the reference value Rref (ohm).

For example, when the synthesized resistance value of the four coils 180, 180a, 180b and 180c is set to 1.7 kiloohm, the reference value Rref is 1.2 kiloohm.

### (5•2) Attitude state 2

Attitude state 2 shown in Fig. 18 corresponds to a case in which the mechanical timepiece having the attitude detecting apparatus according to the invention is in "skewed attitude".

Attitude state 2 corresponds to a case in which the mechanical timepiece having the attitude detecting apparatus according to the invention falls in a range of 22.5 degree through 45 degree in the negative direction of the X-axis line (-X direction).

In attitude state 2, in the circuit block 606, there is constructed a constitution in which pattern A2 and the metal ball 628 are conducted and the resistor R2 is connected in series with pattern A2. Further, in attitude state 2, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (5•3) Attitude state 3

Attitude state 3 shown in Fig. 18 corresponds to a case in which the mechanical timepiece having the attitude detecting apparatus according to the invention is in "skewed attitude".

Attitude state 3 corresponds to a case in which the mechanical timepiece having the attitude detecting apparatus according to the invention falls in a range of 22.5 degree through 45 degree in the negative direction of the Y-axis line (-Y direction).

In attitude state 3, in the circuit block 606, there is constructed a constitution in which pattern D2 and the metal ball 628 are conducted and the resistor R2 is connected in series with pattern D2. Further, in attitude state 3, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (5•4) Attitude state 4

Attitude state 4 shown in Fig. 18 corresponds to a case in which the mechanical timepiece having the attitude detecting apparatus according to the invention is in "erect attitude".

Attitude state 4 corresponds to a case in which the mechanical timepiece having the attitude detecting apparatus according to the invention falls in a range of 0 degree through 22.5 degree in the negative direction of the Y-axis line (-Y direction).

In attitude state 4, in the circuit block 606, there is constructed a constitution in which pattern D1 and the metal ball 628 are conducted and the resistor R2 is connected in series with pattern D1. Further, in attitude state 4, by the wiring pattern, there is constructed a constitution in which the resistor R3 is connected in series with the four coils 180, 180a, 180b and 180c. There is constructed a constitution in which the value of the resistor R3 in this case becomes 0.5 times as much as the reference value Rref (ohm) (that is, 0.5xRref).

### (5•5) Attitude state 5

Attitude state 5 shown in Fig. 18 corresponds to a case in which the mechanical timepiece having the attitude detecting apparatus according to the invention is in "back flat attitude".

Attitude state 5 corresponds to a case in which the mechanical timepiece having the attitude detecting apparatus according to the invention falls in a range of 0 degree through 22.5 degree in the positive direction of the X-axis line (X direction).

In attitude state 5, in the circuit block 606, there is constructed a constitution in which pattern F1 and the metal ball 628 are conducted and the resistor R1 is connected in series with pattern F1. Further, in attitude state 5, by the wiring pattern, there is constructed a constitution in which the resistor R1 is connected in series with the four coils 180, 180a, 180b and 180c. There is constructed a constitution in which the value of the resistor R1 in this case becomes a value the same as the above-described reference value Rref (ohm).

### (5•6) Attitude state 6

Attitude state 6 shown in Fig. 18 corresponds to a case in which the mechanical timepiece having the attitude detecting apparatus according to the invention is in "skewed attitude".

Attitude state 6 corresponds to a case in which the mechanical timepiece having the attitude detecting apparatus according to the invention falls in a range of 22.5 degree through 45 degree in the positive direction of the X-axis line (X direction).

In attitude state 6, in the circuit block 606, there is constructed a constitution in which pattern F2 and the metal ball 628 are conducted and the resistor R2 is connected in series with pattern F2. Further, in attitude state 6, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (5•7) Attitude state 7

Attitude state 7 shown in Fig. 18 corresponds to a case in which the mechanical timepiece having the attitude detecting apparatus according to the invention is in "skewed attitude".

Attitude state 7 corresponds to a case in which the mechanical timepiece having the attitude detecting apparatus according to the invention falls in a range of 22.5 degree through 45 degree in the positive direction of the Y-axis line (Y direction).

In attitude state 7, in the circuit block 606, there is constructed a constitution in which pattern B2 and the metal ball 628 are conducted and the resistor R2 is connected in series with pattern B2. Further, in attitude state 7, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (5•8) Attitude state 8

Attitude state 8 shown in Fig. 18 corresponds to a case in which the mechanical timepiece having the attitude detecting apparatus according to the invention is in "erect attitude".

Attitude state 8 corresponds to a case in which the mechanical timepiece having the attitude detecting apparatus according to the invention falls in a range of 0 degree through 22.5 degree in the positive direction of the Y-axis line (Y direction).

In attitude state 8, in the circuit block 606, there is constructed a constitution in which pattern B1 and the metal ball 628 are conducted and the resistor R3 is connected in series with pattern B1. Further, in attitude state 8, by the wiring pattern, there is constructed a constitution in which the resistor R3 is connected in series with the four coils 180, 180a, 180b and 180c. There is constructed a constitution in which the value of the resistor R3 in this case becomes 0.5 times as much as the reference value Rref (ohm) (that is, 0.5xRref).

### (5•9) Attitude state 9

Attitude state 9 shown in Fig. 18 corresponds to a case in which the mechanical timepiece having the attitude detecting apparatus according to the invention is in "skewed attitude".

Attitude state 9 corresponds to a case in which the mechanical timepiece having the attitude detecting apparatus according to the invention falls in a range of 22.5 degree through 45 degree in the positive direction of the Z-axis line (Z direction).

In attitude state 9, in the circuit block 606, there is constructed a constitution in which pattern C2 and the metal ball 628 are conducted and the resistor R2 is connected in series with pattern C2. Further, in attitude state 9, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (5•10) Attitude state 10

Attitude state 10 shown in Fig. 18 corresponds to a case in which the mechanical timepiece having the attitude detecting apparatus according to the invention is in "erect attitude".

Attitude state 10 corresponds to a case in which the mechanical timepiece having the attitude detecting apparatus according to the invention falls in a range of 0 degree through 22.5 degree in the positive direction of the Z-axis line (Z direction).

In attitude state 10, in the circuit block 606, there is constructed a constitution in which pattern C1 and the metal ball 628 are conducted and the resistor R3 is connected in series with pattern C1. Further, in attitude state 10, by the wiring pattern, there is constructed a constitution in which the resistor R3 is connected in series with the four coils 180, 180a, 180b and 180c. There is constructed a constitution in which the value of the resistor R3 in this case becomes 0.5 times as much as the reference value Rref (ohm) (that is, 0.5xRref).

### (5•11) Attitude state 11

Attitude state 11 shown in Fig. 18 corresponds to a case in which the mechanical timepiece having the attitude detecting apparatus according to the invention is in "skewed attitude".

Attitude state 11 corresponds to a case in which the mechanical timepiece having the attitude detecting apparatus according to the invention falls in a range of 22.5 degree through 45 degree in the negative direction of the Z-axis line (-Z direction).

In attitude state 11, in the circuit block 606, there is constructed a constitution in which pattern E2 and the metal ball 628 are conducted and the resistor R2 is connected in series with pattern E2. Further, in attitude state 11, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (5•12) Attitude state 12

Attitude state 12 shown in Fig. 18 corresponds to a case in which the mechanical timepiece having the attitude detecting apparatus according to the invention is in "erect attitude".

Attitude state 12 corresponds to a case in which the mechanical timepiece having the attitude detecting apparatus according to the invention falls in a range of 0 degree through 22.5 degree in the negative direction of the Z-axis line (-Z direction).

In attitude state 12, in the circuit block 606, there is constructed a constitution in which pattern E1 and the metal ball 628 are conducted and the resistor R3 is connected in series with pattern E1. Further, in attitude state 12, by the wiring pattern, there is constructed a constitution in which the resistor R3 is connected in series with the four coils 180, 180a, 180b and 180c. There is constructed a constitution in which the value of the resistor R3 in this case becomes 0.5 times as much as the reference value Rref (ohm) (that is, 0.5xRref).

### (5•13) Attitude states 13 through 20

Attitude states 13 through 20 shown in Fig. 18 correspond to cases in which the mechanical timepiece having the attitude detecting apparatus according to the invention is in "skewed attitude".

In attitude states 13 through 20, in the circuit block 606, there is constructed a constitution in which one of patterns G1 through G8 and the metal ball 628 are conducted and the resistor R2 is connected in series with the one of patterns G1 through G8. Further, in attitude states 13 through 20, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (6) Third embodiment of attitude detecting apparatus

Next, an explanation will be given of an attitude detecting apparatus 630 according to a third embodiment of an attitude detecting apparatus according to the invention in the embodiment of the mechanical timepiece having the attitude detecting apparatus according to the invention.

The following explanation will be given mainly of a point in which the third embodiment of the attitude detecting apparatus according to the invention differs from the first embodiment of the attitude detecting apparatus according to the invention. Therefore, with regard to portions other than content described below, the above-described explanation of the first embodiment of the attitude detecting apparatus according to the invention will be applied here.

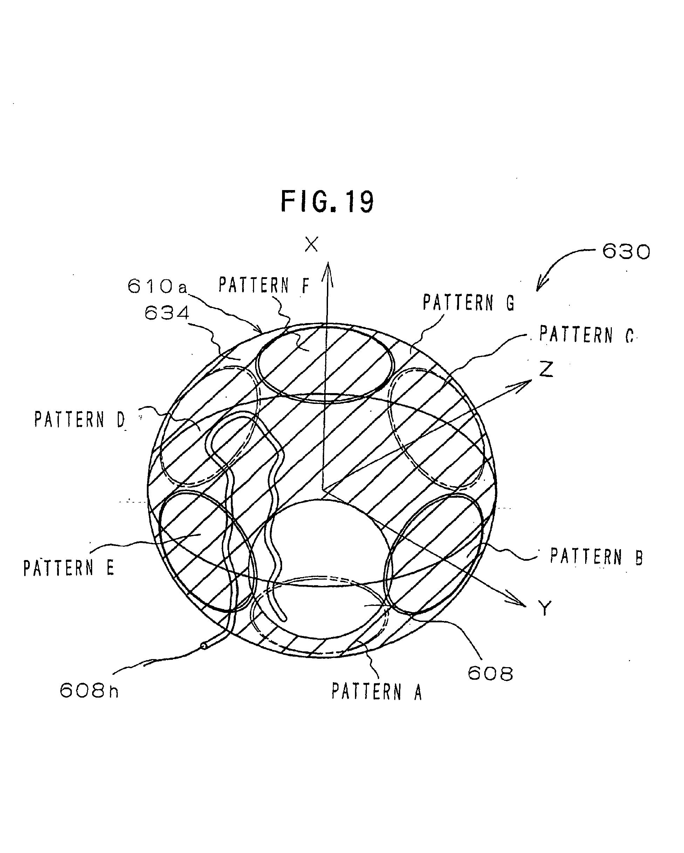

In reference to Fig. 19, the attitude detecting apparatus 630 is provided with the case 610a. Shapes of patterns of the attitude detecting apparatus 630 are the same as those of the attitude detecting apparatus 610. The metal ball 608 is arranged at inside of the case 610a.

An insulating fluid 634 is contained in the case 610a. The insulating fluid 634 is contained at a total or a portion of a portion remaining from a portion of inside of the case 610a for containing the metal ball 608. The insulating fluid 634 is preferably an insulating oil of, for example, chlorinated diphenyl, chlorinated benzene, silicone oil or the like.

It is preferable that the volume of the insulating fluid 634 is 1/1.1 through 1/1.5 of the volume of the case 610a. It is preferable that the volume of the insulating fluid 634 is 1/3 through 1/1 of the volume of the portion remaining from the portion of inside of the case 610a for containing the metal ball 608.

The specific gravity of the insulating fluid 634 is smaller than the specific gravity of the metal ball 608.

By using the insulating fluid 634 and making the specific gravity of the insulating fluid 634 smaller than the specific gravity of the metal wall 608, the attitude can be detected swiftly and firmly and oversensitive reaction can be removed.

In the horizontal state shown by Fig. 19, the metal ball 608 is brought into contact with pattern A. Therefore, in the state shown by Fig. 19, the metal ball 608 and pattern A are shortcircuited (that is, conducted to each other).

Fig. 19 shows a state of the attitude detecting apparatus 630 in which the mechanical timepiece having the attitude detecting apparatus according to the invention is arranged in "flat attitude".

According to the attitude detecting apparatus 630, it is preferable to form the metal ball lead line 608h such that the specific gravity of the metal ball lead line 608h of the metal ball 608 becomes smaller than the specific gravity of the insulating fluid 634. For example, a lead portion of the metal ball lead line 608h is constituted to be an outer shape of about 1/5 through 1/10 of an outer shape of the metal ball lead line 608h and a plastic coating can be adhered around the lead portion.

By making the specific gravity of the metal ball lead line 608h smaller than the specific gravity of the insulating fluid 634, the metal ball lead line 608h can be floated in the insulating fluid 634 and there can firmly be prevented a concern of causing contact failure between the metal ball 608 and the pattern produced by disposing the metal ball lead line 608h below the metal ball 608.

### (7) Fourth embodiment of attitude detecting apparatus

Next, an explanation will be given of an attitude detecting apparatus 640 according to a fourth embodiment of an attitude detecting apparatus according to the invention in the embodiment of the mechanical timepiece having the attitude detecting apparatus according to the invention.

The following explanation will mainly be given of a point in which the fourth embodiment of the attitude detecting apparatus according to the invention differs from the second embodiment of the attitude detecting apparatus according to the invention. Therefore, with regard to portions other than content described below, the above-described explanation with regard to the second embodiment of the attitude detecting apparatus according to the invention will be applied here.

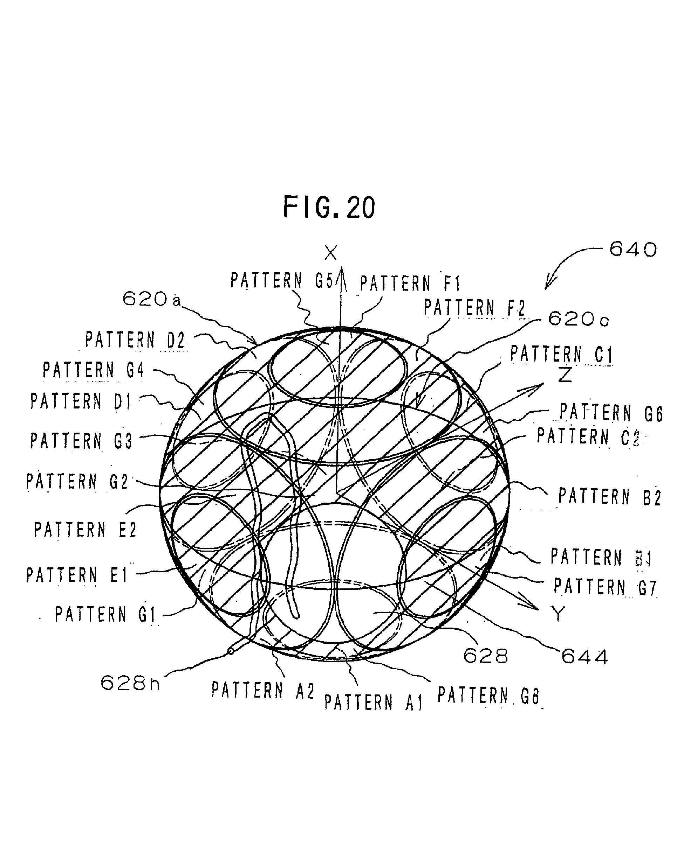

In reference to Fig. 20, the attitude detecting apparatus 640 is provided with the case 620a. Shapes of patterns of the attitude detecting apparatus 640 are the same as those of the attitude detecting apparatus 620. The metal ball 628 is arranged at inside of the case 620a.

An insulating fluid 644 is contained in the case 620a. The insulating fluid 644 is contained at a total or a portion of a portion remaining from a portion of inside of the case 620a for containing the metal ball 628. The insulating fluid 644 is preferably an insulating oil of, for example, chlorinated diphenyl, chlorinated benzene, silicone oil or the like.

It is preferable that the volume of the insulating fluid 644 is 1/1.1 through 1/1.5 of the volume of the case 620a. It is preferable that the volume of the insulating fluid 644 is 1/3 through 1/1 of the volume of the portion remaining from the portion of inside of the case 620a for containing the metal ball 628.

The specific gravity of the insulating fluid 644 is smaller than the specific gravity of the metal ball 628.

By using the insulating fluid 644 and making the specific gravity of the insulating fluid 644 smaller than the specific gravity of the metal ball 628, the attitude can be detected swiftly and firmly and oversensitive reaction can be eliminated.

In the horizontal state shown by Fig. 20, the metal ball 628 is brought into contact with pattern A1. Therefore, in the state shown by Fig. 20, the metal ball 628 and pattern A1 are shortcircuited (that is, conducted to each other).

That is, Fig. 20 shows a state of the attitude detecting apparatus 640 when the mechanical timepiece having the attitude detecting apparatus according to the invention is arranged in "flat attitude".

### (8) Fifth embodiment of attitude detecting apparatus

Next, an explanation will be given of an attitude detecting apparatus 650 according to a fifth embodiment of an attitude detecting apparatus according to the invention in the embodiment of the mechanical timepiece having the attitude detecting apparatus according to the invention.

The following explanation will mainly be given of a point in which the fifth embodiment of the attitude detecting apparatus according to the invention differs from the first embodiment of the attitude detecting apparatus according to the invention. Therefore, with regard to portions other than content described below, the above-described explanation with regard to the first embodiment of the attitude detecting apparatus according to the invention will be applied here.

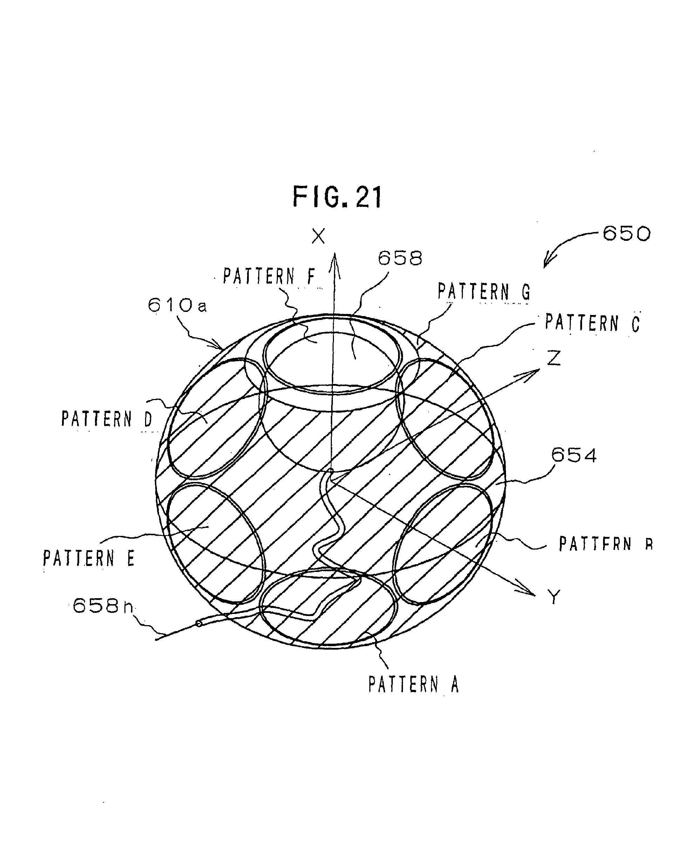

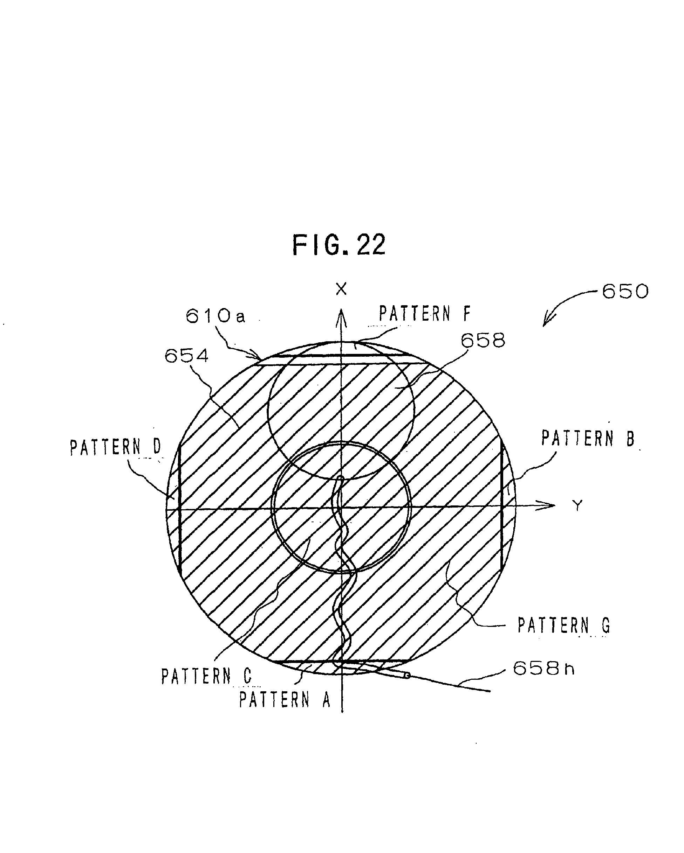

In reference to Fig. 21 and Fig. 22, the attitude detecting apparatus 650 is provided with the case 610a. Shapes of patterns of the attitude detecting apparatus 650 are the same as those of the attitude detecting apparatus 610.

A plastic ball 658 is arranged at inside of the case 610a.

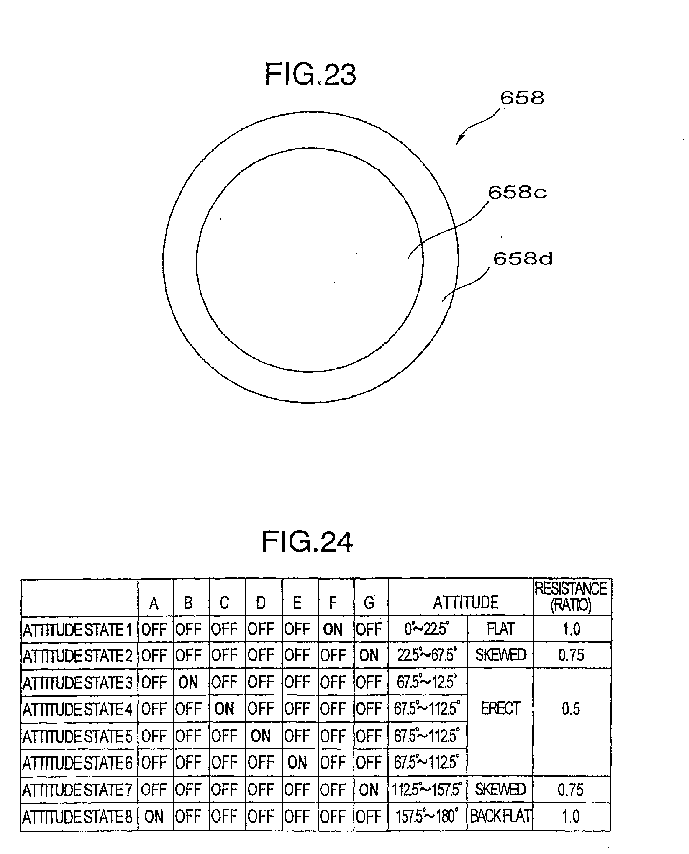

In reference to Fig. 23, the plastic ball 658 includes a ball main body 658c and a conductive layer 658d provided at outside of the ball main body 658c. The ball main body 658c is formed by plastic such as polycarbonate and may be solid or may be hollow.

The conductive layer 658d is formed by nickel plating or the like. Or, a spherical member of a metal such as aluminum or nickel may be adhered to the outer portion of the ball main body 658c as the conductive layer 658d.

In reference to Fig. 21 and Fig. 22 again, a lead line 658h is connected to the conductive layer 658d.

An insulating fluid 654 is contained in the case 610a. The insulating fluid 654 is contained at a total or a large portion of a portion remaining from a portion of inside of the case 610a for containing the plastic ball 658. The insulating fluid 654 is preferably an insulating oil of, for example, chlorinated diphenyl, chlorinated benzene, silicone oil or the like.

There is selected the insulating fluid 654 the specific gravity of which is larger than the specific gravity of the plastic ball 658.

The volume of the insulating fluid 654 is constituted to be an amount by which the plastic ball 658 is floated in the insulating fluid 634 and the conductive layer 658d is brought into contact with an upper pattern when the plastic ball 658 is contained in the case 610a.

By using the insulating fluid 654 and making the specific gravity of the insulating fluid 654 larger than the specific gravity of the plastic ball 658, the attitude can be detected swiftly and firmly and oversensitive reaction can be eliminated.

In the horizontal state as shown by Fig. 21 and Fig. 22, the plastic ball 658 is brought into contact with pattern F. Therefore, in the state shown by Fig. 21 and Fig. 22, the plastic ball 658 and pattern F are shortcircuited (that is, conducted to each other).

Fig. 21 and Fig. 22 show a state of the attitude detecting apparatus 650 when the mechanical timepiece having the attitude detecting apparatus according to the invention is arranged in "flat attitude".

According to the attitude detecting apparatus 650, it is preferable to form the lead line 658h such that the specific gravity of the lead line 658h connected to the conductive layer 658d of the plastic ball 658 is larger than the specific gravity of the insulating fluid 654. For example, a lead portion of the lead line 658h is constituted to be an outer shape of about 4/5 through 19/20 of an outer shape of the lead line 568h and a plastic coating can be adhered around the lead wire portion.

By making the specific gravity of the lead line 658h larger than the specific gravity of the insulating fluid 654, the lead line 658h is not floated in the insulating fluid 654 and there can firmly be prevented a concern of causing contact failure between the conductive layer 658d and the pattern produced by disposing the lead line 658h above the plastic ball 658.

The constitution of the attitude detecting apparatus 650 according to the fifth embodiment of the attitude detecting apparatus of the invention is applicable also to shapes of patterns in the second embodiment of the attitude detecting apparatus according to the invention.

### (8•1) Attitude state 1

Attitude state 1 shown by Fig. 24 corresponds to a case in which the mechanical timepiece having the attitude detecting apparatus according to the invention is in "flat attitude".

Attitude state 1 corresponds to a case in which the mechanical timepiece having the attitude detecting apparatus according to the invention falls in a range of 0 degree through 22.5 degree relative to the horizontal face.

In attitude state 1, in the circuit block 606, there is constructed a constitution in which pattern F and the conductive layer 658d of the plastic ball 658 are conducted and the resistor R1 is connected in series with pattern F. Further, in attitude state 1, by the wiring pattern, there is constructed a constitution in which the resistor R1 is connected in series with the four coils 180, 180a, 180b and 180c. The value of the resistor R1 in this case is defined as the reference value Rref (ohm).

For example, when a synthesized resistance value of the four coils 180, 180a, 180b and 180c is set to 1.7 kiloohm, the reference value Rref is 1.2 kiloohm.

### (8•2) Attitude state 2

Attitude state 2 shown by Fig. 24 corresponds to a case in which the mechanical timepiece having the attitude detecting apparatus according to the invention is in "skewed attitude".

Attitude state 2 corresponds to a case in which the mechanical timepiece having the attitude detecting apparatus according to the invention falls in a range of 22.5 degree through 67.5 degree relative to the horizontal face.

In attitude state 2, in the circuit block 606, there is constructed a constitution in which pattern G and the conductive layer 658d of the plastic ball 658 are conducted and the resistor R2 is connected in series with pattern G. Further, in attitude state 2, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (8•3) Attitude state 3

Attitude state 3 shown by Fig. 24 corresponds to a case in which the mechanical timepiece having the attitude detecting apparatus according to the invention is in "erect attitude"

Attitude state 3 corresponds to a case in which the mechanical timepiece having the attitude detecting apparatus according to the invention falls in a range of 67.5 degree through 112.5 degree relative to the horizontal face.

In attitude state 3, in the circuit block 606, there is constructed a constitution in which pattern B and the conductive layer 658d of the plastic ball 658 are conducted and the resistor R3 is connected in series with pattern B. Further, in attitude state 3, by the wiring pattern, there is constructed a constitution in which the resistor R3 is connected in series with the four coils 180, 180a, 180b and 180c. There is constructed a constitution in which the value of the resistor R3 in this case becomes 0.5 times as much as the reference value Rref (ohm) (that is, 0.5xRref).

### (8•4) Attitude state 4

Attitude state 4 shown by Fig. 24 corresponds to a case in which the mechanical timepiece having the attitude detecting apparatus according to the invention is in "erect attitude".

Attitude state 4 corresponds to a case in which the mechanical timepiece having the attitude detecting apparatus according to the invention falls in a range of 67.5 degree through 112.5 degree relative to the horizontal face.

In attitude state 4, in the circuit block 606, there is constructed a constitution in which pattern C and the conductive layer 658d of the plastic ball 658 are conducted and the resistor R3 is connected in series with pattern C. Further, in attitude state 4, by the wiring pattern, there is constructed a constitution in which the resistor R3 is connected in series with the four coils 180, 180a, 180b and 180c. There is constructed a constitution in which the value of the resistor R3 in this case becomes 0.5 times as much as the reference value Rref (ohm) (that is, 0.5xRref).

### (8•5) Attitude state 5

Attitude state 5 shown by Fig. 24 corresponds to a case in which the mechanical timepiece having the attitude detecting apparatus according to the invention is in "erect attitude".

Attitude state 5 corresponds to a case in which the mechanical timepiece having the attitude detecting apparatus according to the invention falls in a range of 67.5 degree through 112.5 degree relative to the horizontal face.

In attitude state 5, in the circuit block 606, there is constructed a constitution in which pattern D and the conductive layer 658d of the plastic ball 658 are conducted and the resistor R3 is connected in series with pattern D. Further, in attitude state 5, by the wiring pattern, there is constructed a constitution in which the resistor R3 is connected in series with the four coils 180, 180a, 180b and 180c. There is constructed a constitution in which the value of the resistor R3 in this case becomes 0.5 times as much as the reference value Rref (ohm) (that is, 0.5xRref).

### (8•6) Attitude state 6

Attitude state 6 shown by Fig. 24 corresponds to a case in which the mechanical timepiece having the attitude detecting apparatus according to the invention is in "erect attitude".

Attitude state 6 corresponds to a case in which the mechanical timepiece having the attitude detecting apparatus according to the invention falls in a range of 67.5 degree through 112.5 degree relative to the horizontal face.

In attitude state 6, in the circuit block 606, there is constructed a constitution in which pattern E and the conductive layer 658d of the plastic ball 658 are conducted and the resistor R3 is connected in series with pattern E. Further, in attitude state 6, by the wiring pattern, there is constructed a constitution in which the resistor R3 is connected in series with the four coils 180, 180a, 180b and 180c. There is constructed a constitution in which the value of the resistor R3 in this case becomes 0.5 times as much as the reference value Rref (ohm) (that is, 0.5xRref).

### (8•7) Attitude state 7

Attitude state 7 shown by Fig. 24 corresponds to a case in which the mechanical timepiece having the attitude detecting apparatus according to the invention is in "skewed attitude".

Attitude state 7 corresponds to a case in which the mechanical timepiece having the attitude detecting apparatus according to the invention falls in a range of 112.5 degree through 157.5 degree relative to the horizontal face.

In attitude state 7, in the circuit block 606, there is constructed a constitution in which pattern G and the conductive layer 658d of the plastic ball 658 are conducted and the resistor R2 is connected in series with pattern G. Further, in attitude state 7, by the wiring pattern, there is constructed a constitution in which the resistor R2 is connected in series with the four coils 180, 180a, 180b and 180c. There is constructed a constitution in which the value of the resistor R2 in this case becomes 0.75 times as much as the reference value Rref (ohm) (that is, 0.75xRref).

### (8•8) Attitude state 8

Attitude state 8 shown by Fig. 24 corresponds to a case in which the mechanical timepiece having the attitude detecting apparatus according to the invention is in "back flat attitude".

Attitude state 8 corresponds to a case in which the mechanical timepiece having the attitude detecting apparatus according to the invention falls in a range of 157.5 degree through 180 degree relative to the horizontal face.

In attitude state 8, in the circuit block 606, there is constructed a constitution in which pattern A and the conductive layer 658d of the plastic ball 658 are conducted and the resistor R1 is connected in series with pattern A. Further, in attitude state 8, by the wiring pattern, there is constructed a constitution in which the resistor R1 is connected in series with the four coils 180, 180a, 180b and 180c. There is constructed a constitution in which the value of the resistor R1 in this case becomes the reference value Rref.

### (9) Simulation with regard to instantaneous rate

Next, an explanation will be given of a result of a simulation with regard to the instantaneous rate which is carried out with respect to the mechanical timepiece having the attitude detecting apparatus according to the invention developed in order to resolve the problem of the conventional mechanical timepiece.

In reference to Fig. 31, according to the mechanical timepiece having the attitude detecting apparatus of the invention, firstly, as shown by a slender line in Fig. 31, the mechanical timepiece is adjusted to a state in which the instantaneous rate of the timepiece is gained.

According to the mechanical timepiece having the attitude detecting apparatus of the invention, in the case in which the balance with hairspring 140 is rotated by a certain angle or more, when the outer end portion of the hairspring 140c is brought into contact with the first contact member 168a or the second contact member 168b, the effective length of the hairspring 140c is shortened and therefore, the instantaneous rate is further gained.

That is, according to the mechanical timepiece having the attitude detecting apparatus of the invention, in a state in which the outer end portion of the hairspring 140c is not brought into contact with the first contact member 168a and is not brought into contact with the second contact member 168b, as shown by the slender line in Fig. 31, in a state of completely winding up the mainspring, the rate in the flat attitude is about 23 seconds / day (gain of about 23 seconds per day), the rate in the erect attitude is about 18 seconds / day (gain of about 18 seconds per day), when 20 hours have elapsed from the fully wound state, the rate in the flat attitude becomes about 17 seconds / day (gain of about 17 seconds per day), the rate in the erect state is about 13 seconds / day (gain of about 13 seconds per day), when 30 hours have elapsed from the fully wound state, the rate in the erect attitude becomes about -2 seconds / day (loss of about 2 seconds per day) and the rate in the flat state becomes about -3 seconds / day (loss of about 3 seconds per day).

According to the mechanical timepiece having the attitude detecting apparatus of the invention, in a state in which the outer end portion of the hairspring 140c is brought into contact with the first contact member 168a or the second contact member 168b, as shown by an extremely bold line in Fig. 31, from the state of completely winding up the mainspring until 27 hours have elapsed, the instantaneous rate can be maintained at about 5 seconds / day (a state of gaining about 5 seconds per day can be maintained) and when 30 hours have elapsed from the fully wound state, the instantaneous rate becomes about -2 seconds / day (loss of about 2 seconds per day).

According to the mechanical timepiece having the attitude detecting apparatus of the invention, by controlling the swing angle of the balance with hairspring, the change in the instantaneous rate of the timepiece is restrained and therefore, in comparison with the conventional mechanical timepiece indicated by the extremely slender line in Fig. 31, elapsed time period from the fully wound state at which the instantaneous rate is about 0 through 5 seconds / day can be prolonged.

That is, according to the mechanical timepiece having the attitude detecting apparatus of the invention, the duration time period during which the instantaneous rate falls within about plus minus 5 seconds / day, is about 32 hours. The value of the duration time period is about 1.45 times as much as a duration time period during which the instantaneous rate in the conventional mechanical timepiece falls within about plus minus 5 seconds/ day, or about 22 hours.

Therefore, according to the mechanical timepiece having the attitude detecting apparatus of the invention, in comparison with the conventional mechanical timepiece, there is achieved a result of the simulation having very excellent accuracy.

### (10) Effect of the invention

As has been explained above, according to the mechanical timepiece having the attitude detecting apparatus of the invention, there is constructed the constitution in which the rotational angle of the balance with hairspring is controlled in correspondence with various attitudes of the mechanical timepiece. Therefore, the swing angle can substantially be maintained constant in any attitude of the mechanical timepiece.

### [Industrial Applicability]

The mechanical timepiece having the attitude detecting apparatus of the invention is provided with the simple structure and very excellent accuracy.

Further, the mechanical timepiece having the attitude detecting apparatus of the invention is suitable for further efficiently fabricating a small-sized and thin type mechanical timepiece having high accuracy.

The attitude detecting apparatus of the invention is small-sized and highly accurate.

Further, since the attitude detecting apparatus of the invention is small-sized and highly accurate, the attitude detecting apparatus can be used for machine tool, measuring machine, imaging apparatus, recording apparatus and so on.

Further, the attitude detecting apparatus of the invention is suitable for realizing a mechanical timepiece having a simple structure and very excellent accuracy.

## Claims

1. A mechanical timepiece **characterized in** a mechanical timepiece comprising a mainspring constituting a power source of the mechanical timepiece, a front train wheel rotated by a rotational force in rewinding the mainspring and an escapement and speed control apparatus for controlling rotation of the front train wheel, said escapement and speed control apparatus being constituted to include a balance with hairspring alternately repeating right rotation and left rotation, an escape wheel & pinion rotated based on the rotation of the front train wheel and a pallet fork for controlling rotation of the escape wheel and pinion based on operation of the balance with hairspring, further comprising:
a switch mechanism (168, 168a, 168b) constituted to output a signal of ON when a rotational angle of the balance with hairspring (140) becomes equal to or larger than a predetermined threshold and outputting a signal of OFF when the rotational angle of the balance with hairspring (140) does not exceed the threshold value;
a balance with hairspring rotational angle control mechanism (140e, 180) constituted to exert a force for restraining rotation of the balance with hairspring (140) to the balance with hairspring (140) when the switch mechanism (168, 168a, 168b) outputs the signal of ON; and
an attitude detecting apparatus for detecting an attitude of the mechanical timepiece;
wherein operation of the balance with hairspring rotational angle control mechanism (140e, 180) is constituted to control based on a result of detecting the attitude of the mechanical timepiece detected by the attitude detecting apparatus;
wherein the attitude detecting apparatus includes a spherical case (610a) and a plurality of patterns (A through G) arranged at an inner face of the case (610a) and a metal ball (608) contained in the case (610a); and
wherein the attitude detecting apparatus is constituted to detect the attitude of the mechanical timepiece by bringing the metal ball (608) into contact with the patterns (A through G) .

2. The mechanical timepiece according to Claim 1, **characterized in that** the plurality of patterns (A through G) of the attitude detecting apparatus include six circular patterns (A, B, C, D, E, F);
wherein the six circular patterns (A, B, C, D, E, F) are respectively arranged in a positive direction and a negative direction of an X-axis line, in a positive direction and a negative direction of a Y-axis line and in a positive direction and a negative direction of a Z-axis line to thereby constitute point symmetry on an inner side of the case (610a).

3. The mechanical timepiece according to Claim 1, **characterized in that** the plurality of patterns (A through G) of the attitude detecting apparatus include six circular patterns (A1, B1, C1, D1, E1, F1) and six ring-like patterns (A2, B2, C2, D2, E2, F2);
wherein the respective circular patterns (A1, B1, C1, D1, E1, F1) are arranged to be concentric with the respective ring-like patterns (A2, B2, C2, D2, E2, F2);
wherein the six circular patterns (A1, B1, C1, D1, E1, F1) are respectively arranged in a positive direction and a negative direction of an X-axis line, in a positive direction and a negative direction of a Y-axis line and in a positive direction and a negative direction of a Z-axis line to constitute point symmetry on an inner side of the case (620a); and
wherein the six ring-like patterns (A2, B2, C2, D2, E2, F2) are respectively arranged in the positive direction and the negative direction of the X-axis line, in the positive direction and the negative direction of the Y-axis line and in the positive direction and the negative direction of the Z-axis line to constitute point symmetry on the inner side of the case (620a).

4. The mechanical timepiece according to any one of Claim 1 through Claim 3, **characterized in that** the attitude detecting apparatus includes an insulating fluid contained in the case.

5. The mechanical timepiece according to any one of Claim 1 through Claim 3, **characterized in** including the insulating fluid (654) contained in the case;
wherein a plastic ball (658) is contained in the case (610a) in place of the metal ball (608);
wherein the plastic ball (658) includes a conductive layer (658d) at outside thereof;
wherein a specific gravity of the insulating fluid (654) is larger than a specific gravity of the plastic ball (658); and
wherein when the plastic ball (658) is contained in the case (610a), the plastic ball (658) is floated in the insulating fluid (654) and the conductive layer (658d) of the plastic ball (658) is brought into contact with an upper one of the patterns.

6. The mechanical timepiece according to any one of Claim 1 through Claim 5, **characterized in that** the switch mechanism (168, 168a, 168b) is constituted to output the signal of ON when a hairspring (140c) provided at the balance with hairspring (140) is brought into contact with a contact member (168a, 168b) constituting a switch lever.

7. The mechanical timepiece according to any one of Claim 1 through Claim 6, **characterized in that** the balance with hairspring rotational angle control mechanism (140e, 180) includes a balance magnet (140e) provided at the balance with hairspring (140) and coils (180, 180a, 180b, 180c) arranged to be capable of exerting a magnetic force to the balance magnet (140e);
wherein the coils (180, 180a, 180b, 180c) are constituted to exert the magnetic force to the balance magnet (140e) to thereby restrain the rotation of the balance with hairspring (140) when the switch mechanism (168, 168a, 168b) outputs the signal of ON and not to exert the magnetic force to the balance magnet (140e), when the switching mechanism (168, 168a, 168b) outputs the signal of OFF.

8. The mechanical timepiece according to Claim 7, **characterized in that** the attitude detecting apparatus includes a plurality of resistors (R1 through R3) having different resistance values provided to correspond to conductive states of the patterns of the attitude detecting apparatus and one of the resistors (R1 through R3) is connected to the coils (180, 180a, 180b, 180c) based on a result of detecting the attitude of the mechanical timepiece detected by the attitude detecting apparatus.

9. An attitude detecting apparatus **characterized in** an attitude detecting apparatus comprising:
a spherical case (610a);
a plurality of patterns (A through G) arranged at an inner face of the case (610a); and
a metal ball (608) contained in the case (610a);
wherein an attitude is detected by bringing the metal ball (608) and the patterns (A through G) into contact with each other.

10. The attitude detecting apparatus according to Claim 9, **characterized in that** the plurality of patterns (A through G) include six circular patterns (A, B, C, D, E, F);
wherein the six circular patterns (A, B, C, D, E, F) are respectively arranged in a positive direction and a negative direction of an X-axis line, in a positive direction and a negative direction of a Y-axis line and in a positive direction and a negative direction of a Z-axis line to constitute point symmetry on an inner side of the case (610a).

11. The attitude detecting apparatus according to Claim 9, **characterized in that** the plurality of patterns (A through G) include six circular patterns (A1, B1, C1, D1, E1, F1) and six ring-like patterns (A2, B2, C2, D2, E2, F2);
wherein the respective circular patterns (A1, B1, C1, D1, E1, F1 are respectively arranged to be concentric with the ring-like patterns (A2, B2, C2, D2, E2, F2);
wherein the six circular patterns (A1, B1, C1, D1, E1, F1) are respectively arranged in a positive direction and a negative direction of an X-axis line, in a positive direction and a negative direction of a Y-axis line and in a positive direction and a negative direction of a Z-axis line to constitute point symmetry on an inner side of the case (620a); and
wherein the six ring-like patterns (A2, B2, C2, D2, E2, F2) are respectively arranged in the positive direction and the negative direction of the X-axis line, in the positive direction and the negative direction of the Y-axis line and in the positive direction and the negative direction of the Z-axis line to constitute point symmetry on the inner side of the case (620a).

12. The attitude detecting apparatus according to any one of Claim 9 through Claim 11, **characterized in** including an insulating fluid contained in the case.

13. The attitude detecting apparatus according to any one of Claim 9 through Claim 11, **characterized in** including an insulating fluid (654) contained in a case;
wherein a plastic ball (658) is contained in the case (610a) in place of the metal ball (608);
wherein the plastic ball (658) includes a conductive layer (658d) at outside thereof;
wherein a specific gravity of the insulating fluid (654) is larger than a specific gravity of the plastic ball (658); and
wherein when the plastic ball (658) is contained in the case (610a), the plastic ball (658) is floated in the insulating fluid (654) and the conductive layer (658d) of the plastic ball (658) is brought into contact with an upper one of the patterns.
